(19) **Europäisches Patentamt**
**European Patent Office**
**Office européen des brevets**

(11) **EP 4 395 435 B1**

(12) **EUROPEAN PATENT SPECIFICATION**

(45) Date of publication and mention
of the grant of the patent:
**06.05.2026 Bulletin 2026/19**

(21) Application number: **21961106.8**

(22) Date of filing: **22.10.2021**

(51) International Patent Classification (IPC):
*H04W 72/04* (2023.01)    *H04L 1/16* (2023.01)
*H04W 4/40* (2018.01)

(52) Cooperative Patent Classification (CPC):
**H04L 1/16; H04L 1/18; H04L 1/1854; H04L 1/1861;**
**H04L 1/1896;** H04W 4/40; H04W 74/0808

(86) International application number:
**PCT/CN2021/125912**

(87) International publication number:
**WO 2023/065363 (27.04.2023 Gazette 2023/17)**

(54) **WIRELESS COMMUNICATION METHOD AND TERMINAL DEVICE**

DRAHTLOSKOMMUNIKATIONSVERFAHREN UND ENDGERÄTEVORRICHTUNG

PROCÉDÉ DE COMMUNICATION SANS FIL ET DISPOSITIF TERMINAL

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**03.07.2024 Bulletin 2024/27**

(60) Divisional application:
**26168722.2**

(73) Proprietor: **GUANGDONG OPPO MOBILE**
**TELECOMMUNICATIONS**
**CORP., LTD.**
**Dongguan, Guangdong 523860 (CN)**

(72) Inventors:
• **ZHAO, Zhenshan**
**Dongguan, Guangdong 523860 (CN)**
• **ZHANG, Shichang**
**Dongguan, Guangdong 523860 (CN)**
• **MA, Teng**
**Dongguan, Guangdong 523860 (CN)**

(74) Representative: **Taor, Simon Edward William et al**
**Venner Shipley LLP**
**200 Aldersgate**
**London EC1A 4HD (GB)**

(56) References cited:
EP-A1- 4 325 762        EP-A1- 4 325 906
WO-A1-2021/081948       WO-A1-2022/073186
CN-A- 111 526 494       CN-A- 112 039 640
CN-A- 112 840 584       US-A1- 2021 320 759

• NOKIA ET AL: "Discussion of physical layer
procedures for V2X sidelink", vol. RAN WG1, no.
Reno, USA; 20191118 - 20191122, 9 November
2019 (2019-11-09), XP051823138, Retrieved from
the Internet <URL:https://ftp.3gpp.org/tsg_ran/
WG1_RL1/TSGR1_99/Docs/R1-1911957.zip
R1-1911957-Nokia-sidelink procedures.docx>
[retrieved on 20191109]
• LG ELECTRONICS: "Discussion on physical
layer procedures for NR sidelink", 3GPP TSG
RAN WG1 MEETING #98, R1-1908906, 17 August
2019 (2019-08-17), XP051765514
• SAMSUNG: "On Sidelink HARQ Procedure",
3GPP TSG RAN WG1 #97, R1-1906948, 3 May
2019 (2019-05-03), XP051708983
• OPPO: "Remaining issues of physical layer
procedure for NR-V2X", 3GPP TSG RAN WG1
#100, R1-2000492, 14 February 2020
(2020-02-14), XP051852890

**Description**

TECHNICAL FIELD

The disclosure relates to the field of communications, and particularly to a method for wireless communication and a terminal device.

BACKGROUND

In new radio (NR) sidelink (SL) transmission, physical sidelink shared channels (PSSCHs) correspond to transmission resources of physical sidelink feedback channel (PSFCH) one by one, i.e., for each PSSCH transmission, receiving end terminal(s) may determine a unique PSFCH transmission resource and perform sidelink feedback on the PSFCH transmission resource.

When sidelink-based transmission (such as device to device (D2D) or vehicle to everything (V2X) transmission) works in unlicensed spectrum, the terminal device needs to meet transmission requirements of the unlicensed spectrum before performing the sidelink transmission. For example, the terminal device may determine, through listen before talk (LBT), whether a channel can be accessed. Specifically, the terminal device monitors whether the channel is idle, and when the channel is idle, the terminal device may perform the sidelink transmission, otherwise, the sidelink transmission may not be performed. When the receiving end terminal(s) needs to send a PSFCH to feed back an acknowledgement (ACK), the PSFCH may not be sent if the channel is determined to be busy through the LBT. In such situation, the transmitting end terminal(s) may not detect the PSFCH and may determine that it is a discontinuous transmission (DTX), and will retransmit the sidelink data, which may lead to a waste of resources. Related technologies can be found in patent documents WO 2021/081948 A1, EP 4325762 A1, EP 4325906A1, WO 2022/073186A1 and non-patent document R1-1911957. Patent document WO 2021/081948 A1 provides a HARQ feedback method including: a first terminal device performs LBT, and after the LBT succeeds, the first terminal device sends HARQ information of multiple second terminal devices on the channel resources after the LBT succeeds. Patent document EP 4325762 A1 provides a method for determining a sidelink feedback resource, including determining, by a first UE, a first resource, where the first resource is one or more resources used by the first UE to perform a channel access procedure. Patent document EP 4325906A1 provides a resource configuration method including obtaining, by a terminal device, first configuration information, the first configuration information being used for configuring sidelink communication resources; obtaining, by the terminal device, a structure of a resource allocation unit according to the first configuration information; and allocating, by the terminal device, one or more resource allocation units for sidelink communication of the terminal device. Patent document WO 2022/073186A1 provides a method for communicating using sidelink resources allocated in an unlicensed spectrum. The method generally includes receiving one or more transmissions from a second UE on one or more sidelink sub-channels spanning one or more resource block (RB) sets of an unlicensed spectrum occupied by the second UE for a channel occupancy time (COT) and transmitting, to the second UE, feedback information corresponding to the one or more received transmissions on a feedback channel based on a mapping between the one or more sidelink sub-channels and the feedback channel that confines the feedback channel to at least the one or more RB sets and one or more guard bands between the one or more RB sets of the unlicensed spectrum occupied by the second UE for the COT. The non-patent document R1-1911957 provides discussion on sidelink PSFCH design and related HARQ operation, sidelink CSIRS procedures, and sidelink power control.

SUMMARY

Embodiments of the present disclosure provide a method for wireless communication and a terminal device. One PSSCH corresponds to multiple PSFCH transmission occasions, thereby increasing transmission occasions of PSFCH carrying feedback information corresponding to the PSSCH, so that the terminal device can perform sidelink transmission by using the unlicensed spectrum, thereby optimizing NR SL transmission. The present invention is defined in the claims.

According to the above technical solution, the terminal device determines the M PSFCH transmission occasions corresponding to the first PSSCH, and determines, according to the result of the channel access procedure, whether to transmit the PSFCH carrying feedback information corresponding to the first PSSCH by using a certain PSFCH transmission occasion. Therefore, transmission occasions of the PSFCH carrying the feedback information corresponding-ing to the PSSCH can be increased, so that the terminal device can perform sidelink transmission by using the unlicensed spectrum, thereby optimizing NR SL transmission.

BRIEF DESCRIPTION OF THE DRAWINGS

FIG. 1 is a schematic diagram of architecture of a communication system applied in an embodiment of the disclosure.

FIG. 2 is a schematic diagram of architecture of another communication system applied in an embodiment of the disclosure.

FIG. 3 is a schematic diagram of a sidelink communication within a network coverage provided in the present disclosure.

FIG. 4 is a schematic diagram of a sidelink communication of which a part is within a network coverage provided in the present disclosure.

FIG. 5 is a schematic diagram of a sidelink communication outside a network coverage provided in the present disclosure.

FIG. 6 is a schematic diagram of a sidelink communication with a central control node provided in the present disclosure.

FIG. 7 is a schematic diagram of a unicast sidelink communication provided in the present disclosure.

FIG. 8 is a schematic diagram of a multicast sidelink communication provided in the present disclosure.

FIG. 9 is a schematic diagram of a broadcast sidelink communication provided in the present disclosure.

FIG. 10 is a schematic diagram of sidelink feedback provided in the present disclosure.

FIG. 11 is a schematic diagram of slot structures of a PSDCH and a PSCCH/PSSCH provided in the present disclosure.

FIG. 12 is a schematic diagram of a resource of a sidelink feedback channel provided in the present disclosure.

FIG. 13 is a schematic diagram of a correspondence relationship between a PSFCH transmission resource subset and a PSSCH transmission resource provided in the present disclosure.

FIG. 14 is a schematic diagram of a PSFCH resource index provided in the present disclosure.

FIG. 15 is a schematic diagram of an IRB structure provided in the present disclosure.

FIG. 16 is a schematic diagram of a method for wireless communication according to an embodiment of the disclosure.

FIG. 17 is a schematic diagram of a correspondence relationship between two transmission occasions of a PSFCH and a PSSCH according to an embodiment of the disclosure.

FIG. 18 is a schematic diagram of a PSFCH transmission resource subset according to an embodiment of the disclosure.

FIG. 19 is a schematic diagram of determination of a PSFCH transmission resource according to an embodiment of the disclosure.

FIG. 20 is a schematic diagram of another determination of a PSFCH transmission resource according to an embodiment of the disclosure.

FIG. 21 is a schematic diagram of four sets of PSFCH transmission resources according to an embodiment of the disclosure.

FIG. 22 is a schematic diagram of another four sets of PSFCH transmission resources according to an embodiment of the disclosure.

FIG. 23 is a schematic diagram of a PSFCH transmission resource according to an embodiment of the disclosure.

FIG. 24 is a schematic block diagram of a terminal device, which is not a part of the present invention.

FIG. 25 is a schematic block diagram of a communication device according to an embodiment of the disclosure.

FIG. 26 is a schematic block diagram of an apparatus according to an embodiment of the disclosure.

FIG. 27 is a schematic block diagram of a communication system according to an embodiment of the disclosure.

DETAILED DESCRIPTION

Technical solutions in the embodiments of this disclosure will be described with reference to the accompanying drawings in the embodiments of the disclosure. All other embodiments obtained by a person of ordinary skill in the art based on the embodiments of the disclosure without paying inventive efforts shall fall within the scope of protection of the disclosure.

The technical solution of the embodiments of the present disclosure is applied to various communication systems, such as: a global system of mobile communication (GSM) system, a code division multiple access (CDMA) system, a wideband CDMA (WCDMA) system, a general packet radio service (GPRS), a long term evolution (LTE) system, an advanced LTE (LTE) system, an NR system, an evolution system of NR system, an LTE-based access to unlicensed spectrum (LTE-U), an NR-based access to unlicensed spectrum (NR-U), a non-terrestrial networks (NTN) system, a universal mobile telecommunications system (UMTS), a wireless local area network (WLAN), an internet of things (IoT), a wireless fidelity (WiFi), a 5th generation (5G) system or other communication systems, etc.

Generally, the number of connections supported by the traditional communication system support is limited and the connections are easy to be implemented. However, with the development of communication technology, the mobile communication system will not only support traditional communications, but also support, for example, a D2D communication, a machine to machine (M2M) communication, a machine type communication (MTC), a vehicle to vehicle (V2V) communication, or the V2X communication, etc. Embodiments of the present application may also be applied to these communication systems.

Optionally, the communication system in the embodiments of the present disclosure may be applied to a carrier aggregation (CA) scenario, a dual connectivity (DC) scenario, and a standalone (SA) network distribution scenario.

Optionally, the communication system in the embodiments of the present disclosure may be applied to an unlicensed spectrum. The unlicensed spectrum may also be regarded as a shared spectrum. Optionally, the communication system in the embodiments of the present disclosure may also be applied to a licensed spectrum. The licensed spectrum may also be regarded as an unshared spectrum.

Various embodiments are described in combination with network device and terminal device in the embodiments of the disclosure. The terminal device may be called user equipment (UE), an access terminal, a subscriber unit, a subscriber station, a mobile station, a mobile console, a remote station, a remote terminal, a mobile device, a user terminal, a terminal, a wireless communication device, a user agent, or user apparatus.

The terminal device may be a station (ST) in the WLAN, and may be a cellular phone, a cordless phone, a session initiation protocol (SIP) phone, a wireless local loop (WLL) station, a personal digital assistant (PDA) device, a handheld device with a wireless communication function, a computing device, another processing device connected to a wireless modem, an on-board device, a wearable device, a terminal device in a next generation communication system such as the NR network, or a terminal device in a future evolved public land mobile network (PLMN) or the like.

In an embodiment of the present disclosure, the terminal device may be deployed on land, including indoors or outdoors, hand-held, wearable or vehicle-mounted; ow may also be deployed on the water (such as ships, etc.); or may also be deployed in the air (such as airplanes, balloons and satellites, etc.).

In an embodiment of the present disclosure, the terminal device may be a mobile phone (Mobile Phone), a tablet computer (Pad), a computer with a wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, or a wireless terminal device in smart home, a vehicle-mounted communication device, a wireless communication chip/application specific integrated circuit (ASIC)/system on chip (SoC), etc.

By way of example but not limitation, in an embodiment of the present disclosure, the terminal device may also be a wearable device. The wearable device may also be referred to as a wearable smart device, which is a general name of wearable devices developed by applying wearable technology and intelligently designing daily wear, such as glasses, gloves, watches, clothing and shoes. The wearable device is a portable device that is worn directly on the body or integrated into the clothes or accessories of users. The wearable device is not only a hardware device, but also realizes powerful functions through software support, data interaction and cloud interaction. The generalized wearable smart device may have comprehensive functions, a large size and a function of realizing whole or partial functions without relying on a smart phone, such as a smart watch or smart glasses, and may only focus on certain application functions and need to be used in conjunction with another device such as a smart phone, these kind of wearable smart devices may include various smart bracelets and smart jewelry for monitoring vital signs.

In an embodiment of the present disclosure, the network device may be a device for communicating with a mobile device. The network device may be an access point (AP) in the WLAN, a base transceiver station (BTS) in the GSM or CDMA, a base station NodeB (NB) in a WCDMA, an Evolved Node B (eNB or eNodeB) in the LTE, or a relay station or an AP, or a vehicle-mounted device, a wearable device, a network device or gNB in the NR network, or a network device in the future evolved PLMN network or a network device in the NTN network, etc.

By way of example and not limitation, in an embodiment of the disclosure, the network device may have a mobility characteristic, for example the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, and the like. Optionally, the network device may also be a base station arranged on land, water and the like.

In an embodiment of the disclosure, the network device may provide services for a cell, and the terminal device communicates with the network device through transmission resources (e.g. frequency-domain resources or called spectrum resources) used by the cell. The cell may be a cell corresponding to the network device (such as a base station), and may belong to a macro base station or a base station corresponding to a small cell. Here, small cell may include: metro cell, micro cell, pico cell, femto cell, etc. These small cells have the characteristics of small coverage and low transmission power, and are suitable for providing high-speed data transmission services.

It should be understood that, terms "system" and "network" in the disclosure are usually interchangeably used. The term "and/or" in the disclosure is only an association relationship for describing the associated objects, and represents that three relationships may exist, for example, A and/or B may represent the following three cases: A exists separately, both A and B exist, and B exists separately. In addition, the character "/" in this specification generally indicates an "or" relationship between the associated objects.

Terms used in the detailed description of this disclosure are used only for explanation of specific embodiments of this disclosure and are not intended to limit the invention. The terms "first", "second", "third", "fourth" and the like presented in the specification and claims of the present disclosure and the accompanying drawings are used for distinguishing different objects and are not for describing a particular order. Furthermore, the terms "including" and "having" and any variations thereof are intended to cover non-exclusive inclusion.

It should also be understood that the word "indication" mentioned in embodiments of the disclosure may be a direct indication or an indirect indication, and may also be indicative of a relationship. For example, A indicates B, which may represent that A directly indicates B, for example, B may be obtained through A; or that A indirectly indicates B, for example, A indicates C, and B may be obtained through C; or that there is an association between A and B.

The term "correspondence" in embodiments of the present disclosure may represent that the listed items have a direct or indirect correspondence relationship, or an association relationship, or a relationship of indicating and being indicated, configured and being configured, etc.

The phrase "being predefined" or "being preconfigured" mentioned in embodiments of the disclosure may be implemented by pre-storing corresponding codes, tables, or by other means that may be used for indicating associated information in devices (such as terminal devices and network devices), the specific implementation of which is not limited in the present disclosure. For example, something being predefined may refer to being defined in the protocol.

In the embodiments of the disclosure, the "protocol" may be a standard protocol in the communication field, such as an LTE protocol, an NR protocol, and related protocols applied in future communication systems, which is not limited herein.

For convenience of understanding the technical solutions of the embodiments of the disclosure, the technical solutions in the disclosure are described below through detailed embodiments. The following related technologies used as alternative solutions may be combined with technical solution of the embodiments of the disclosure in various ways, and the combination belongs to the scope of protection of the embodiments of the disclosure. The embodiments of the disclosure include at least part of the following contents.

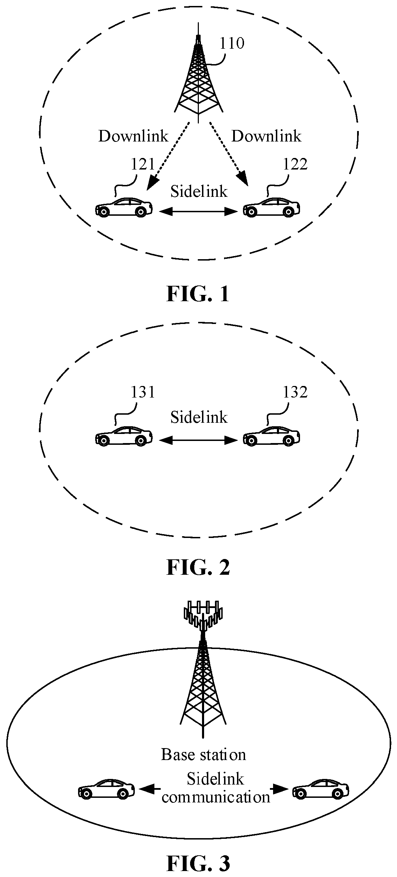

FIG. 1 is a schematic diagram of architecture of a communication system applicable in an embodiment of the disclosure. Transmission resources of on-board terminals (an on-board terminal 121 and an on-board terminal 122) are allocated by a base station 110, and the on-board devices transmit data on sidelink by using the resources allocated by the base station 110. Specifically, the base station 110 may allocate a resource for a single transmission to the terminal, and may also allocate a resource for a semi-static transmission to the terminal.

FIG. 2 is a schematic diagram of architecture of another communication system applicable in an embodiment of the disclosure. The on-board terminal (an on-board terminal 131 and an on-board terminal 132) independently selects transmission resources from the sidelink resources for data transmission. Optionally, the on-board terminal may randomly select the transmission resources or select the transmission resources by monitoring.

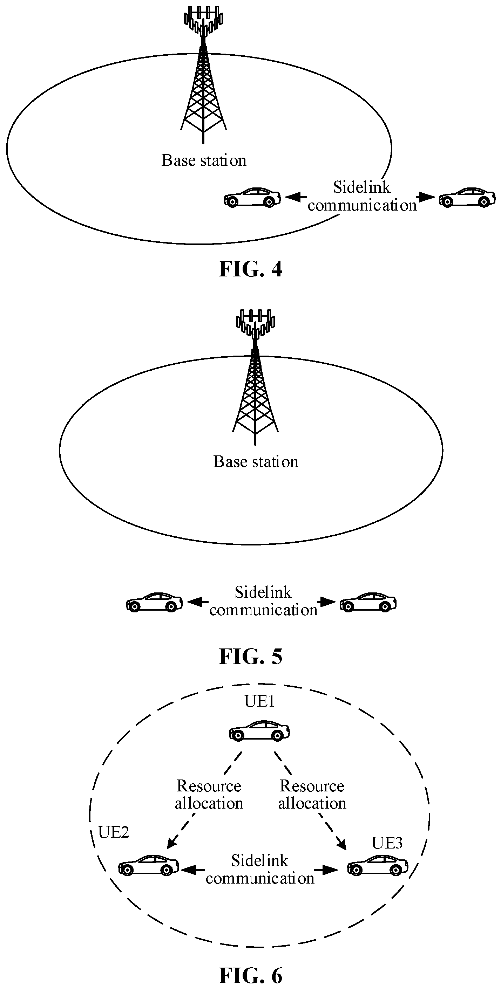

It should be noted that the sidelink communication, according to the network coverage situation of the terminal in communication, may be divided into the sidelink communication within a network coverage, as illustrated in FIG. 3; the sidelink communication of which a part is within the network coverage, as illustrated in FIG. 4; and the sidelink communication outside the network coverage, as illustrated in FIG. 5.

In FIG. 3: for the sidelink communication within the network coverage, all terminals performing the sidelink communication are located within a coverage range of a base station, so that all the terminals may perform the sidelink communication based on the same sidelink configuration by receiving configuration signaling of the base station.

In FIG. 4: for the sidelink communication of which a part is within the network coverage, some terminals performing the sidelink communication are located in the coverage area of the base station, and these terminals may receive the configuration signaling of the base station and perform the sidelink communication according to the configuration of the base station. However, the terminal(s) located outside the coverage area of the network may not receive the configuration signaling of the base station. In this case, the terminal outside the coverage area of the network may determine sidelink configuration according to pre-configuration information and information carried in a physical sidelink broadcast channel (PSBCH) sent by the terminal located within the coverage area of the network, to perform the sidelink communication.

In FIG. 5: for the sidelink communication outside the network coverage, all terminals performing the sidelink communication are located outside the coverage area of the network, and all the terminals determine the sidelink configuration according to pre-configuration information to perform the sidelink communication.

In FIG. 6: for the sidelink communication with a central control node, multiple terminals consist of a communication group. The communication group includes a central control node, which may be called a cluster header (CH) terminal. The central control node has one of the following functions: being responsible for establishment of the communication group and joining and leaving of group members; performing resource coordination, allocating sidelink transmission resources for other terminals and receiving sidelink feedback information from other terminals; and coordinating resources with other communication groups and the like.

It should be noted that the D2D communication is a sidelink (SL) transmission technology based on D2D.

Different from the traditional cellular system in which communication data is received or sent by a base station, the V2X system applies a direct communication mode between terminals, which has a higher spectrum efficiency and a less transmission delay. In 3GPP, two transmission modes are defined, which are referred to as a first mode (i.e., sidelink resource allocation mode 1) and a second mode (i.e., sidelink resource allocation mode 2).

In the first mode: transmission resources of the terminal are allocated by the base station, and the terminal performs data transmission on a sidelink based on the resources allocated by the base station. The base station may allocate a resource for a single transmission to the terminal, and may also allocate a resource for a semi-static transmission to the terminal. As illustrated in FIG. 3, the terminal is located within the coverage of the network, and the network allocates transmission resources to the terminal for sidelink transmission.

In the second mode: the terminal selects a resource in a resource pool for data transmission. As illustrated in FIG. 5, the terminal is located outside the coverage of the cell, and the terminal independently selects transmission resources in a pre-configured resource pool for sidelink transmission. Alternatively, as illustrated in FIG. 3, the terminal independently selects the transmission resources in the resource pool configured by the network for sidelink transmission.

In the NR-V2X communication, automatic driving is supported, which put forwards higher requirements for data interaction between vehicles, such as higher throughput, les delay, higher reliability, larger coverage and more flexible resource allocation.

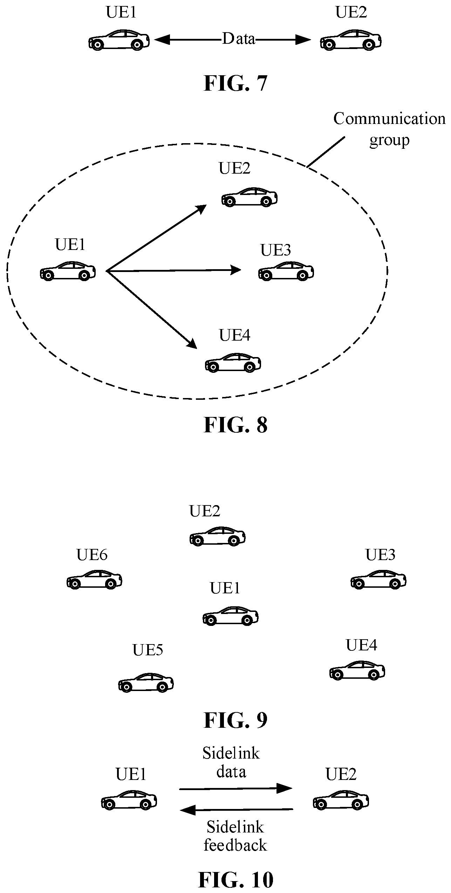

In the LTE-V2X, a broadcast transmission mode is supported, and in the NR-V2X, unicast and multicast transmission modes are introduced. For the unicast transmission, the receiving end terminal includes only one terminal, as shown in FIG. 7, the unicast transmission is carried out between UE1 and UE2. For the multicast transmission, the receiving end is all terminals in a communication group or all terminals within a certain transmission distance. As illustrated in FIG. 8, UE1, UE2, UE3 and UE4 form a communication group, in which UE1 sends data, and other terminal devices in the group are receiving end terminals. For the broadcast transmission mode, the receiving end is any terminal around the transmitting end terminal. As illustrated in FIG. 9, UE1 is the transmitting end terminal, and other terminals around UE1, i.e., UE2 to UE6, are all receiving end terminals.

In order to facilitate a better understanding of the embodiments of the present disclosure, a sidelink feedback channel related to the disclosure is described.

In order to improve the reliability of NR-V2X, the sidelink feedback channel is introduced. For example, in the unicast transmission, the transmitting end terminal transmits sidelink data (including a physical sidelink control channel (PSCCH) and a PSSCH) to the receiving end terminal, the receiving end terminal transmits hybrid automatic repeat request (HARQ) feedback information (including ACK or negative acknowledgement (NACK)) to the transmitting end terminal. The transmitting end terminal determines whether data retransmission is required based on the feedback information from the receiving end terminal. The HARQ feedback information is carried in the sidelink feedback channel such as a PSFCH, as illustrated in FIG. 10.

The sidelink feedback may be activated or deactivated by pre-configured information or network-configured information, or may be activated or deactivated by the transmitting end terminal. If the sidelink feedback is activated, the receiving end terminal receives the sidelink data sent by the sending end terminal, and feeds back ACK or NACK to the sending end according to the detection result, then the sending end terminal determines to send retransmission data or new data according to the feedback information from the receiving end. If the sidelink feedback is deactivated, the receiving end terminal does not need to send feedback information, and the sending end terminal generally sends data in a blind retransmission mode. For example, the sending end terminal repeatedly sends each sidelink data K times, instead of determining whether to send retransmission data according to the feedback information from the receiving end terminal.

In order to facilitate a better understanding of the embodiments of the present disclosure, format of the sidelink feedback channel related to the disclosure is described.

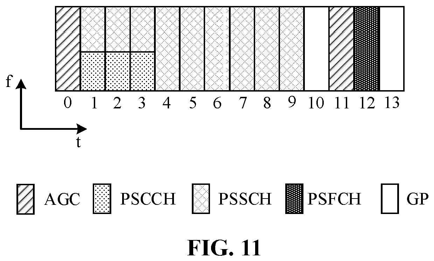

In NR-V2X, the sidelink feedback channel PSFCH is introduced, the PSFCH only carries 1-bit HARQ-ACK information and occupies two time-domain symbols in the time domain (the second symbol carries sidelink feedback information, the data on the first symbol is a copy of the data on the second symbol, and this symbol is used as Auto gain control (AGC)), and occupies one physical resource block (PRB) in the frequency domain. The structures of PSFCH and PSSCH/PSCCH in one slot are illustrated in FIG. 11. FIG. 11 schematically illustrates positions of time-domain symbols occupied by the PSFCH, PSCCH, and PSSCH in one slot. In the slot, the last symbol is used as a guard period (GP), the second to last symbol is used for PSFCH transmission, data on the third to last symbol is the same as data on the PSFCH symbol and is used as the AGC, the fourth to last symbol is also used as a GP. The first symbol in the slot is used as an AGC, data on this symbol is the same as data on the second time-domain symbol in the slot. The PSCCH occupies three time-domain symbols, and the remaining symbols may be used for PSSCH transmission.

In order to facilitate a better understanding of the embodiments of the present disclosure, a resource of the sidelink feedback channel related to the disclosure is described.

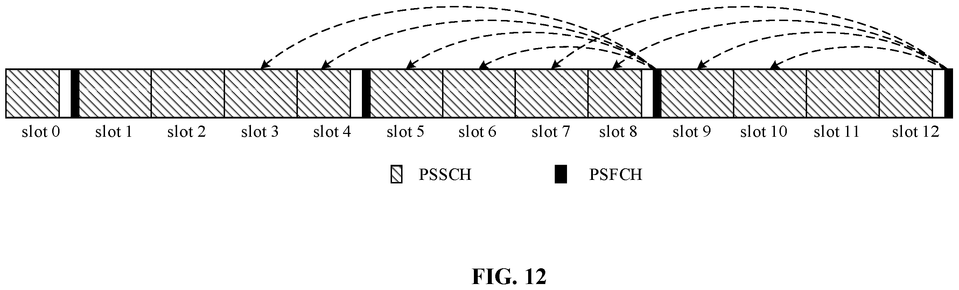

In order to reduce the overhead of the PSFCH channel, it is defined that a PSFCH transmission resource is included in a slot in every P slots, i.e., a period of sidelink feedback resource is P slots, where P= {1, 2, 4}. The parameter P is pre-configured or network-configured, and the case of P=4 may be illustrated in FIG. 12. In FIG. 12, the minimum time gap between the PSSCH and the PSFCH associated with the PSSCH is two slots. Therefore, the feedback information of PSSCHs transmitted in slot 3, slot 4, slot 5 and slot 6 is transmitted in slot 8, so the slots {3, 4, 5, 6} may be regarded as a slot set, and the PSFCHs corresponding to the PSSCHs transmitted in the slot set are located in a same slot. It should be understood that FIG. 12 schematically illustrates the time-domain positions of PSSCH and PSFCH in case that the PSSCH and PSFCH are included in one slot, in which the last GP symbol in the slot is not reflected.

In the NR-V2X, the sidelink feedback resource is determined based on: the slot and a sub-channel where the PSSCH is located, source identity (ID) information, and target ID information. Specifically, the PSFCH transmission resource set is divided into multiple sub-sets according to parameter(s) of the PSFCH period in resource pool configuration information and the number of sub-channels available for PSSCH transmission. The PSFCH transmission resource in each sub-set corresponds to a PSSCH transmission in a sub-channel and in a slot, and the specific PSFCH transmission resource in the sub-set is determined according to the source ID information and the target ID information.

For a resource pool, if the PSFCH period is denoted by P (as determined from the parameter of sidelink PSFCH period (*sl-PSFCH-Period*)), the parameter $N_{\mathrm{PSSCH}}^{\mathrm{PSFCH}} = P$. The resource pool includes $N_{\mathrm{subch}}$ sub-channels (as determined from the parameter of the number of sidelink sub-channels (*sl-NumSubchannel*)), and the configured number of PRBs included in the resource set available for PSFCH transmission is $M_{\mathrm{PRB,\ set}}^{\mathrm{PSFCH}}$ (as determined from the sidelink PSFCH resource block set (*sl-PSFCH-RB-Set*)).

In some embodiments, the number of PRBs of a PSFCH corresponding to a PSSCH sub-channel in a slot is determined by Formula 1.

$$M_{\mathrm{subch,\ slot}}^{\mathrm{PSFCH}} = M_{\mathrm{PRB,\ set}}^{\mathrm{PSFCH}} / \left( N_{\mathrm{subch}} \cdot N_{\mathrm{PSSCH}}^{\mathrm{PSFCH}} \right) \qquad \text{Formula 1}$$

In some embodiments, the PRBs available for the PSFCH corresponding to the PSSCH transmitted in the j-th sub-channel of the i-th slot may be as defined by Formula 2.

$$\left[ \left( i + j \cdot N_{\mathrm{PSSCH}}^{\mathrm{PSFCH}} \right) \cdot M_{\mathrm{subch,\ slot}}^{\mathrm{PSFCH}}, \ \left( i + 1 + j \cdot N_{\mathrm{PSSCH}}^{\mathrm{PSFCH}} \right) \cdot M_{\mathrm{subch,\ slot}}^{\mathrm{PSFCH}} - 1 \right] \qquad \text{Formula 2}$$

where $i = 0, 1, \ldots \ldots, N_{\mathrm{PSSCH}}^{\mathrm{PSFCH}} - 1$; $j = 0, 1, \ldots \ldots, N_{\mathrm{subch}}$ - 1.

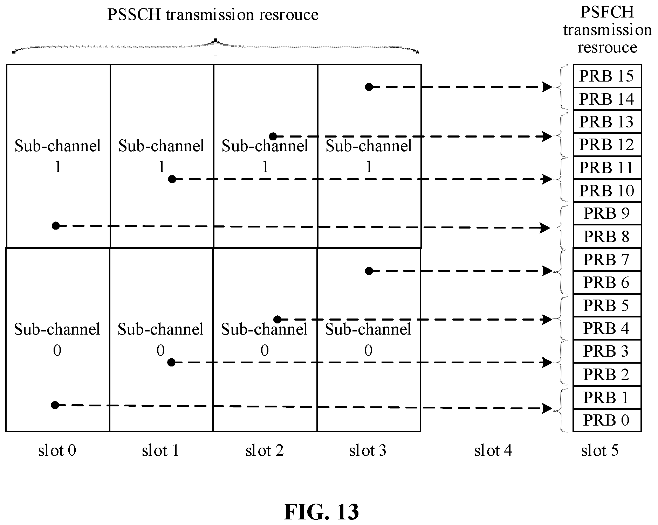

These PRBs constitute a subset of PSFCH transport resources. As illustrated in FIG. 13, the period of PSFCH is four slots, i.e., one PSFCH slot corresponds to four PSSCH slots. The resource pool includes two sub-channels, and the resource pool configuration information configures 16 PRBs for transmitting the PSFCH. Therefore, one sub-channel in one slot corresponds to two PRBs of the PSFCH, and the sub-channels of PSSCH correspond to the PRBs of PSFCH in order of time domain first and then frequency domain. As illustrated in FIG. 13, sub-channel 0 of slot 0 corresponds to PRB0 and PRB1 of the PSFCH, sub-channel 0 of slot 1 corresponds to PRB2 and PRB3 of the PSFCH, and so on.

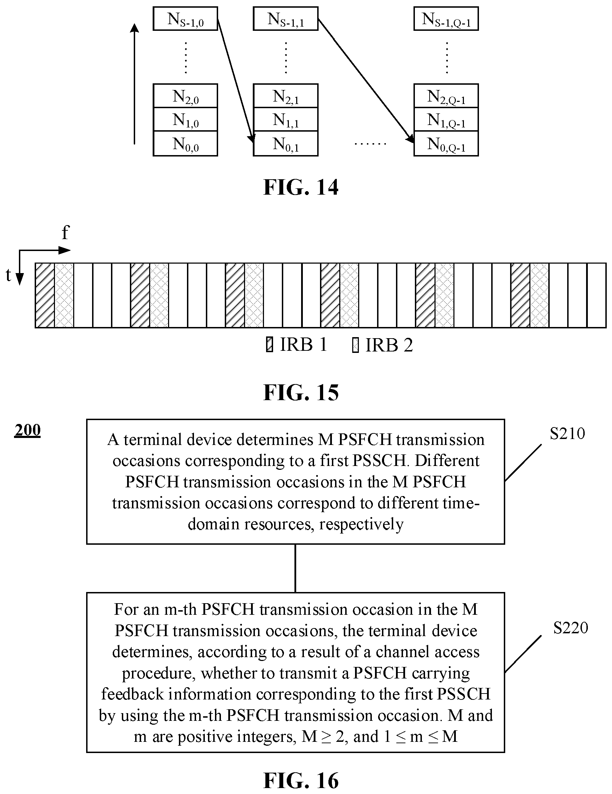

The number of PSFCHs that can be multiplexed in a PRB by code division multiplexing (CDM) is determined by the parameter $N_{\mathrm{CS}}^{\mathrm{PSFCH}}$. A cyclic shift pair represents a pair of cyclic shift values for carrying ACK or NACK, or, the cyclic shift pair may be a cyclic shift for carrying NACK in case of only NACK (NACK-only) being fed back (there is no cyclic shift for carrying ACK in this case). In the PSFCH transmission resource set corresponding to a PSSCH sub-channel, PSFCH transmission resources are indexed in a mode of frequency domain first and then code domain. As illustrated in FIG. 14, the index of the PSFCH resource is represented as $N_{\mathrm{PRB,CS}}$. The PSFCH transmission resource set in FIG. 14 includes S PRBs, and each PRB includes Q cyclic shift pairs, and all the indexes of the PSFCH transmission resources are illustrated in FIG. 14.

The NR-V2X introduces two modes for determining the PSFCH transmission resource according to the PSSCH transmission resource, and the mode to be selected is indicated by the resource pool configuration parameter.

In the first mode, the PSFCH transmission resource is determined according to an index of an initial sub-channel occupied by the PSSCH.

In the second mode, the PSFCH transmission resource is determined according to the indexes of all sub-channels occupied by the PSSCH.

The PSFCH transmission resource set corresponding to a PSSCH channel is determined by Formula 3:

$$R_{\mathrm{PRB,\ CS}}^{\mathrm{PSFCH}} = N_{\mathrm{type}}^{\mathrm{PSFCH}} \cdot M_{\mathrm{subch,\ slot}}^{\mathrm{PSFCH}} \cdot N_{\mathrm{CS}}^{\mathrm{PSFCH}} \qquad \text{Formula 3}$$

where $N_{\text{CS}}^{\text{PSFCH}}$ represents a cyclic shift pair supported in the PRB of a PSFCH. $N_{\text{type}}^{\text{PSFCH}} = 1$ in the first mode and $N_{\text{type}}^{\text{PSFCH}} = N_{\text{subch}}^{\text{PSSCH}}$ in the second mode., $N_{\text{subch}}^{\text{PSSCH}}$ is the number of sub-channels occupied by the PSSCH.

One PSSCH corresponds to $R_{\text{PRB, CS}}^{\text{PSFCH}}$ PSFCH transmission resources, and the terminal device determines the PSFCH transmission resource in the PSFCH transmission resource set according to Formula 4:

$$(P_{\text{ID}} + M_{\text{ID}}) mod R_{\text{PRB, CS}}^{\text{PSFCH}} \qquad \text{Formula 4}$$

where $P_{\text{ID}}$ represented ID information of the terminal transmitting the PSSCH, that is, the source ID carried in sidelink control information (SCI) format 2-A or SCI format 2-B. For the first sidelink feedback mode in multicast communication (i.e. the receiving end feeding back ACK or NACK information), $M_{\text{ID}}$ is the member ID of the receiving end terminal in the communication group and the member ID is different from the target ID and radio network temporary identity (RNTI) information of the receiving end terminal. A terminal in the communication group has a unique member ID in the group, so that the receiving end terminals in the group may determine different PSFCH transmission resources according to the IDs of their own. For the second sidelink feedback mode in unicast or multicast communication (that is, the receiving end only feeds back NACK information), $M_{\text{ID}} = 0$.

In order to facilitate a better understanding of the embodiments of the present disclosure, an unlicensed spectrum related to the disclosure is described.

The unlicensed spectrum is a spectrum divided by countries and regions and used for wireless device communication. The unlicensed spectrum is usually regarded as a shared spectrum, that is, communication devices in different communication systems may use the spectrum as long as they meet requirements set by countries or regions on this spectrum, and do not need to apply for exclusive spectrum authorization from the government.

Some countries or regions have stipulated the requirements needed to be met when using the unlicensed spectrum, to make various communication systems using the unlicensed spectrum coexist friendly on the spectrum. For example, the communication devices follow the principle of "LBT", that is, a communication device needs to monitor a channel before sending a signal on the channel of the unlicensed spectrum. Only when the channel monitoring result is that the channel is idle, the communication device may send the signal. If the channel monitoring result of the channel of the unlicensed spectrum obtained by the communication device is that the channel is busy, the communication device may not send the signal. In order to ensure fairness, a duration used by the communication device occupying the channel of the unlicensed spectrum for signal transmission may not exceed a maximum channel occupancy time (MCOT).

In order to facilitate a better understanding of the embodiments of the present disclosure, channel access modes in the NR-U system related to the disclosure are described.

Communication in unlicensed frequency bands generally needs to meet the corresponding requirements. For example, if the terminal wants to perform communication in unlicensed frequency band, the terminal needs to access the channel by LBT. In NR-U, there are several LBT modes.

The LBT mode of Type 1: which relates to a multi-slot channel detection with random fallback based on contention window size adjustment. Channel occupation with a duration Tmcot may be initiated according to a channel access priority p. The base station using the LBT mode of Type 1 may share channel occupation time (COT) to the terminal in addition to sending data of the base station. The terminal using the LBT mode of Type 1 may share the COT to the base station in addition to sending its own data. The following Table 1 gives channel access priorities and their corresponding parameters when the terminal performs Type-1 LBT. The smaller the value of p is, the higher the channel access priority class is.

Table 1 Channel access parameters corresponding to different channel priorities

| channel access priority class (p) | $m_p$ | $CW_{\text{min, }p}$ | $CW_{\text{max, }p}$ | $T_{\text{mcot, }p}$ | Allowable $CW_p$ value |
|---|---|---|---|---|---|
| 1 | 2 | 3 | 7 | 2 ms | {3, 7} |
| 2 | 2 | 7 | 15 | 4 ms | {7, 15} |
| 3 | 3 | 15 | 1023 | 6 ms or 10 ms | {15, 31, 63, 127, 255, 511, 1023} |
| 4 | 7 | 15 | 1023 | 6 ms or 10 ms | {15,31,63, 127,255,511, 1023} |

It should be noted that in the above Table 1, $m_p$ refers to the number of backoff slots corresponding to the channel access priority class $p$, $CW_p$ refers to a contention window size corresponding to the channel access priority class $p$, $CW_{\text{min, }p}$ refers to a minimum value of $CW_p$ corresponding to the channel access priority class $p$, $CW_{\text{max, }p}$ refers to a maximum value of $CW_p$ corresponding to the channel access priority class $p$, and $T_{\text{mcot, }p}$ refers to a maximum channel occupation duration corresponding to the channel access priority class *p*.

In four channel access priorities of the Type 1 in NR-U, p=1 is the highest priority.

Type 2 is a channel access mode based on a channel monitoring slot with a fixed duration.

The LBT mode of Type 2A relates to a single-slot channel detection of 25 us. That is, the channel detection is started at 25 us before data transmission. For a detection of 16 us and a detection of 19 us, if the channel is idle in both detections, the channel is determined as being idle and channel access may be performed.

The LBT mode of Type 2B relates to a single-slot channel detection of the fixed duration of 16 us, in which the channel may be determined as being idle if the channel is idle for more than 4 us in the last 9 us of the detection.

In the LBT mode of Type 2C, the transmission is performed directly without channel detection because a time difference between the present transmission and the previous transmission is less than 16 us and the present and the previous transmissions may be considered as a same transmission, but a duration of the transmission does not exceed 584 us.

In order to facilitate a better understanding of the embodiments of the present disclosure, a structure of an interlaced resource block (IRB) in the NR-U system related to the disclosure is described

The communication in the unlicensed frequency band generally needs to meet the corresponding requirements. For example, if the terminal wants to perform communication in unlicensed frequency band, a range of the frequency band occupied by the terminal needs to be greater than or equal to 80% of the system bandwidth. Therefore, in order to enable as many users to access the channel in the same time as possible, a resource allocation mode of the IRB is defined in NR-U. An IRB resource includes N PRBs, and a total of M IRB resources are included in the range of frequency band. The PRBs included in the m-th IRB resource are {m, M+m, 2M+m, 3M+m, ...... }. As illustrated in FIG. 15, the system bandwidth includes 30 resource blocks (RBs), i.e., 5 IRB resources (M=5), each IRB resource includes 6 RBs (i.e., N=6), and a frequency-domain interval between adjacent RBs in an IRB is the same and equal to 5 RBs.

In order to facilitate a better understanding of the embodiments of the present disclosure, the solution to be solved by the disclosure is described.

In the NR SL transmission, PSSCHs corresponds to PSFCH transmission resources one by one, that is, for each PSSCH transmission, the receiving terminal may determine a unique PSFCH transmission resource and perform sidelink feedback on the PSFCH transmission resource.

When the transmission based on sidelink (such as D2D or V2X) works in an unlicensed spectrum, the terminal device needs to meet transmission requirements of the unlicensed spectrum before performing the sidelink transmission. For example, the terminal device monitors whether the channel is idle through LBT, and if the channel is idle, the terminal device may perform the sidelink transmission, otherwise, the sidelink transmission may not be performed. When the receiving end terminal needs to send the PSFCH to feed back an ACK, the PSFCH may not be sent if the channel is determined to be busy through the LBT. In such situation, the transmitting end terminal cannot detect the PSFCH and may determine that it is a DTX, and will retransmit the sidelink data, which may lead to a waste of resources.

To solve the above problem, the present disclosure provides a solution for sidelink transmission. One PSSCH corresponds to multiple PSFCH transmission occasions, thereby increasing transmission occasions of a PSFCH carrying feedback information corresponding to the PSSCH, so that the terminal device can perform sidelink transmission by using the unlicensed spectrum, thereby optimizing NR SL transmission.

The technical solution in the disclosure is described below through detailed embodiments.

FIG. 16 is a schematic flowchart of a method 200 for wireless communication according to an embodiment of the disclosure. As illustrated in FIG. 16, the method 200 for wireless communication may include at least part of the following contents.

At S210, a terminal device determines M PSFCH transmission occasions corresponding to a first PSSCH. Different PSFCH transmission occasions in the M PSFCH transmission occasions correspond to different time-domain resources, respectively.

At S220, for an m-th PSFCH transmission occasion in the M PSFCH transmission occasions, the terminal device determines, according to a result of a channel access procedure, whether to transmit a PSFCH carrying feedback information corresponding to the first PSSCH by using the m-th PSFCH transmission occasion. M and m are positive integers, $M \geq 2$, and $1 \leq m \leq M$.

In an embodiment of the present disclosure, a PSSCH may correspond to multiple PSFCH transmission occasions, thereby increasing transmission occasions of a PSFCH carrying feedback information corresponding to the PSSCH. Therefore, the success rate of PSFCH transmission in the unlicensed spectrum can be improved, so that the terminal device can perform sidelink transmission by using the unlicensed spectrum. Moreover, a case, that the transmission of the PSFCH carrying the feedback information corresponding to the PSSCH is not performed, caused by the channel being non-idle channels can be avoided, and trigger of unnecessary sidelink data retransmission can also be avoided, thereby optimizing the NR SL transmission.

In an embodiment of the disclosure, the first PSSCH may be any PSSCH received by the terminal device, that is, another PSSCH received by the terminal device also corresponds to M PSFCH transmission occasions, which is not limited in the disclosure.

Embodiments of the disclosure may be applied to the unlicensed spectrum. The m-th PSFCH transmission occasion may be any one of the M PSFCH transmission occasions. In some embodiments, the channel access procedure may also be an LBT process. The operation that the terminal device determines whether to transmit the PSFCH carrying the feedback information corresponding to the first PSSCH by using the m-th PSFCH transmission occasion according to the result of the channel access procedure may also be referred to as that the terminal device determines whether to transmit the PSFCH carrying the feedback information corresponding to the first PSSCH by using the m-th PSFCH transmission occasion according to a result of LBT. For example, if the LBT is successful, the terminal device determines to transmit the PSFCH carrying the feedback information corresponding to the first PSSCH by using the m-th PSFCH transmission occasion. If the LBT is unsuccessful, the terminal device determines to not transmit the PSFCH carrying the feedback information corresponding to the m-th PSFCH transmission occasion; or the terminal device discards sidelink transmission corresponding to the m-th PSFCH transmission occasion.

In some embodiments, when the result of the channel access procedure indicates that the channel is idle, the terminal device determines to transmit the PSFCH carrying the feedback information corresponding to the first PSSCH by using the m-th PSFCH transmission occasion. Otherwise, the terminal device determines to not transmit the PSFCH carrying the feedback information corresponding to the first PSSCH by using the m-th PSFCH transmission occasion; or the terminal device discards sidelink transmission corresponding to the m-th PSFCH transmission occasion.

In other words, when the result of the channel access procedure indicates that the channel is non-idle, the terminal device determines to not transmit the PSFCH carrying the feedback information corresponding to the first PSSCH by using the m-th PSFCH transmission occasion; or the terminal device discards the sidelink transmission corresponding to the m-th PSFCH transmission occasion.

Specifically, the terminal device transmits the PSFCH carrying the feedback information corresponding to the first PSSCH by using the m-th PSFCH transmission occasion in case that the result of the channel access procedure indicates that the channel is idle.

In some embodiments, at most one PSFCH carrying the feedback information corresponding to the first PSSCH is transmitted by the terminal device in the M PSFCH transmission occasions. For example, the terminal device transmits a PSFCH when the LBT performed by the terminal device in the PSFCH transmission occasion is successful; otherwise, the terminal device continues to perform the LBT in the next PSFCH transmission occasion, and so on.

The communication device needs to carry out LBT (also known as a channel detection) before sending channels or signals on the unlicensed spectrum (also known as a shared spectrum), and the transmission can be performed only when the LBT is successful, otherwise, the transmission cannot be performed. Therefore, communication on the shared spectrum is opportunistic transmission. From the point of view of system networking, the channel detection includes two mechanisms, one is LBT of load-based equipment (LBE), which is also called a dynamic channel detection, dynamic channel access or dynamic channel occupancy. The other is LBT of frame-based equipment (FBE), which is also called a semi-static channel detection, semi-static channel access or semi-static channel occupancy.

In the channel access mechanism of LBE, or called a dynamic channel access mode, there are many channel access manners, such as Type 1 channel access, Type 2A channel access, Type 2B channel access and Type 2C channel access.

Type 1 channel access: the channel detection manner of the communication device is a multi-slot channel detection with random fallback based on contention window size adjustment. The number of detection slots that need channel detection is randomly generated according to the contention window, and the size of the contention window is determined according to a channel access priority class (CAPC) corresponding to a transmission service. Specifically, under the manner of Type 1 channel access, the CAPC may be determined according to a priority of the transmission service. For example the above Table 1 is an example of channel access parameters corresponding to different channel access priorities. The less the value of p is, the higher the channel access priority class is. Optionally, the above Table 1 is used for Type 1 channel access for uplink transmission of the terminal device.

Type 2A channel access: the channel detection manner of the communication device is a channel detection of single detection slot with a fixed duration of 25 microseconds. Specifically, under the manner of Type 2A channel access, the communication device may perform the channel detection within a detection slot of 25 microseconds before transmission starts, and perform the transmission after the channel detection is successful.

Type 2B channel access: the channel detection manner of the communication device is a channel detection of single detection slot with a fixed duration of 16 microseconds. Specifically, under the manner of Type 2B channel access, the communication device may perform the channel detection within a detection slot of 16 microseconds before transmission starts, and perform the transmission after the channel detection is successful. A gap length between a starting position of the transmission and an ending position of the last transmission is 16 microseconds.

Type 2C channel access: the communication device transmits without channel detection after the gap ends. Specifically, under the manner of Type 2C channel access, the communication device may transmit directly, but the gap length between a starting position of the transmission and an ending position of the last transmission is less than or equal to 16 microseconds. In addition, the duration of the transmission does not exceed 584 microseconds.

In a first embodiment, the terminal device determines the M PSFCH transmission occasions corresponding to the first PSSCH in a set of PSFCH transmission slots configured by resource pool configuration information. In other words, in the above S210, the terminal device determines the M PSFCH transmission occasions corresponding to the first PSSCH in the set of PSFCH transmission slots configured by the resource pool configuration information. In addition, in the present embodiment, the resource pool configuration information may configure only one set of PSFCH transmission slots.

In a specific example, the resource pool configuration information may configure the PSFCH period with P= {1, 2, 4} slots; the minimum time gap between the PSSCH and the associated PSFCH with $T_{gap}$= {2, 3} slots. When a slot k in the resource pool satisfies k mod P=0, the slot k includes a PSFCH transmission resource, and a set of slots k including PSFCH transmission resources constitute the above-mentioned set of PSFCH transmission slots.

It should be understood that the value of the PSFCH period is not limited in the embodiments of the disclosure, for example, P=1, or P=2, or P=4, or P=8.

It should be understood that the value of the minimum time gap $T_{gap}$ between the PSSCH and the associated PSFCH is not limited in the embodiments of the disclosure, for example, $T_{gap}$=1, or $T_{gap}$=2, or $T_{gap}$=3.

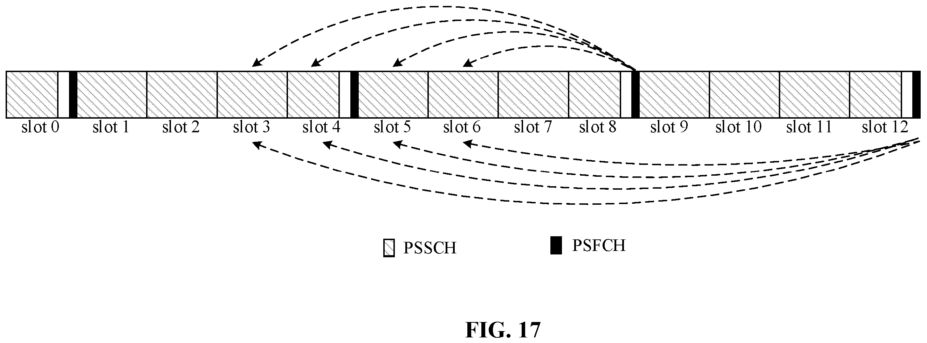

As illustrated in FIG. 17, the resource pool configuration information may configure P=4 and $T_{gap}$=2, so that the PSFCH transmission resources (i.e., a set of PSFCH transmission slots) are included in slots such as slots 0/4/8/12, and no PSFCH transmission resource is included in other slots.

In some implementations of the first embodiment, the terminal device determines a slot where a first PSFCH transmission occasion in the M PSFCH transmission occasions is located according to a slot where the first PSSCH is located and a minimum time gap between the first PSSCH and a PSFCH associated with the first PSSCH; and the terminal device determines slots where remaining M-1 PSFCH transmission occasions in the M PSFCH transmission occasions are respectively located according to the slot where the first PSFCH transmission occasion is located and a PSFCH period.

In other words, the terminal device may determines the slot, in the set of PSFCH transmission slots, where the first PSFCH transmission occasion in the M PSFCH transmission occasions is located according to the slot where the first PSSCH is located and the minimum time gap between the first PSSCH and a PSFCH associated with the first PSSCH. In addition, the terminal device may determine slots, in the set of PSFCH transmission slots, where remaining M-1 PSFCH transmission occasions in the M PSFCH transmission occasions are respectively located according to the slot where the first PSFCH transmission occasion is located and the PSFCH period.

In some implementations of the first embodiment, the terminal device may determine the slot, where the first PSFCH transmission occasion in the M PSFCH transmission occasions is located, in the set of PSFCH transmission slots as a slot n' according to the slot n where the first PSSCH is located and the minimum time gap $T_{gap}$ between the first PSSCH and the PSFCH associated with the first PSSCH. The slot n' is the first slot, including the PSFCH transmission resource, after the slot n+$T_{gap}$ (including the slot n+$T_{gap}$).

In some implementations of the first embodiment, the terminal device determines a slot where an A-th PSFCH transmission occasion in the M PSFCH transmission occasions is located according to the following Formula 5. Because 2 ≤ A ≤ M, that is, the terminal device may determine, in the set of PSFCH transmission slots, the slots where the remaining M-1 PSFCH transmission occasions are respectively located in the M PSFCH transmission occasions according to the following Formula 5:

$$n' + K1 \times (A - 1) \times P \qquad\qquad \text{Formula 5}$$

where n' represents the slot where the first PSFCH transmission occasion is located, A is a positive integer and 2 ≤ A ≤ M, K1 is a positive integer, K1 is determined by pre-definition, pre-configuration or configuration information from a network device, and P represents the PSFCH period.

For example, K1=1. Optionally, the default value K1=1, that is, K1=1 when K1 is not pre-configured or network-configured.

In a specific example, as illustrated in FIG. 17, the resource pool configuration information may configure P=4 and $T_{gap}$=2, so that the PSFCH transmission resources are included in slots such as slots 0/4/8/12, and no PSFCH transmission resource is included in other slots. For example, if the slot where the PSSCH is located is n, then the slot corresponding to the first PSFCH transmission occasion is the first slot, including the PSFCH transmission resource, after the slot n+$T_{gap}$ (i.e. n+2) (including the slot n+2). For example, the first transmission occasion of the PSFCH corresponding to the PSSCH transmission in slot 3 is located in slot 8; and the first transmission occasion of the PSFCH corresponding to the PSSCH transmission in slot 6 is also located in slot 8. As illustrated in FIG. 17, if M=2, the first transmission occasion of the PSFCH corresponding to the PSSCH in the slot 3 is located in slot 8, and the second transmission occasion is located in the next slot determined according to the PSFCH period, i.e., slot 12.

In some implementations of first embodiment, the terminal device determines, according to an index value m, a PSFCH transmission resource in a PSFCH transmission resource set which is included in the slot where the m-th PSFCH transmission occasion in the M PSFCH transmission occasions is located, m is a positive integer and $1 \leq m \leq M$.

Example 1

In some implementations of the first embodiment, each PSFCH transmission slot in the set of PSFCH transmission slots includes M PSFCH resource subsets. For example, different PSFCH resource subsets correspond to different PSFCH transmission occasions, respectively. Optionally, M PSFCH resource subsets correspond to M PSFCH transmission occasions one by one.

In some embodiments, in the PSFCH transmission slot, M PSFCH resource subsets correspond to different frequency-domain resource, respectively.

For example, a parameter *sl-PSFCH-RB-Set* is included in the PSFCH resource configuration parameter, the parameter configures a set of RBs available for PSFCH transmission through a bit map, in which one bit corresponding to one RB. M pieces of *sl-PSFCH-RB-Set* may be configured to respectively correspond to different RB sets when M PSFCH resource subsets are included in a PSFCH transmission slot, so that M PSFCH resource subsets can be configured.

In some embodiments, the PSFCH resource subsets of the M PSFCH resource subset includes resources at granularity of IRB, or, the PSFCH resource subsets of the M PSFCH resource subset includes resources at granularity of RB.

In a specific example, when a PSFCH occupies a resource at granularity of IRB, multiple IRB resources may be configured in the frequency-domain in the PSFCH slot. M PSFCH resource subsets may be configured when M resource subsets are included in the slot. The resources are included in each PSFCH resource subset at granularity of IRB. For example, if the bandwidth of the sidelink system is 20 MHz and the subcarrier spacing is 15 kHz, the frequency-domain resource in a slot may be divided into 10 IRB resources. If M=2, i.e., one PSFCH slot includes two PSFCH resource subsets, then each PSFCH resource subset may include five IRB resources. For example, PSFCH resource subset 0 includes IRB #0 to IRB #4; PSFCH resource subset 1 includes IRB #5 to IRB #9.

In some implementations of the first embodiment, the operation that the terminal device determines, according to the index value m, the PSFCH transmission resource in the PSFCH transmission resource set which is included in the slot where the m-th PSFCH transmission occasion is located includes the following actions.

The terminal device determines that the PSFCH transmission resource of the m-th PSFCH transmission occasion corresponding to the first PSSCH is located in an m-th PSFCH resource subset in the slot where the m-th PSFCH transmission occasion is located. Alternatively, the terminal device determines that the PSFCH transmission resource of the m-th PSFCH transmission occasion corresponding to the first PSSCH is located in an (M-m+1)-th PSFCH resource subset in the slot where the m-th PSFCH transmission occasion is located.

In some implementations of the first embodiment, the terminal device determines the PSFCH transmission resource in the m-th PSFCH resource subset in the slot where the m-th PSFCH transmission occasion is located according to at least one of: a sub-channel index corresponding to a frequency-domain starting position of the first PSSCH; a number of sub-channels corresponding to a frequency-domain resource size occupied by the first PSSCH; slot information of the first PSSCH; identity (ID) information of a transmitting device for the first PSSCH; or ID information of the terminal device.

In some implementations of the first embodiment, M PSFCH resource subsets are included in the PSFCH slot, and the indexes of corresponding PSFCH resource subsets are 0, 1, ..., M-1. If the PSFCH transmission resource of the m-th transmission occasion of the PSFCH corresponding to one PSSCH is located in the m-th PSFCH resource subset of the slot where the m-th PSFCH transmission occasion is located, the PSFCH transmission resource in the m-th PSFCH resource subset may be determined according to the above Formulas 1 to 4, where $M_{\text{PRB, set}}^{\text{PSFCH}}$ represents the number of PRBs included in the m-th PSFCH resource subset.

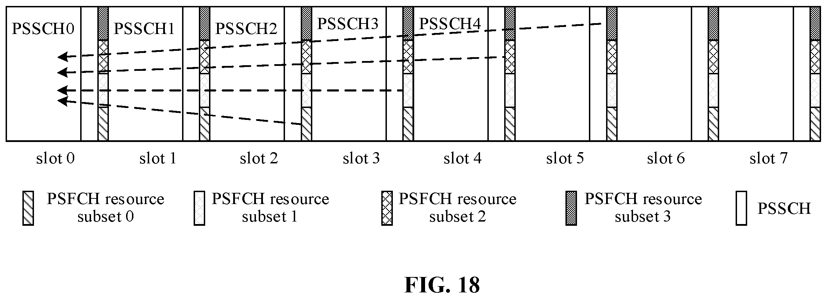

In a specific example, as illustrated in FIG. 18, the resource pool configuration information may configure P=1, $T_{\text{gap}}$=2 and M=4. Therefore, the PSFCH transmission resource is included in each slot. The first transmission occasion of the PSFCH corresponding to the PSSCH in the slot 0 is located in slot 2; the second transmission occasion is located in the next slot determined according to the PSFCH period, i.e., slot 3; and the third transmission occasion is located in slot 4, the fourth transmission occasion is located in slot 5. PSSCH0 to PSSCH4 are transmitted in slot 0 to slot 4, respectively. Each PSFCH slot includes four PSFCH transmission resource subsets, and different PSFCH transmission resource subsets respectively correspond to transmission occasions of PSFCH corresponding to different PSSCHs. For example, for PSSCH0 transmitted in slot 0, the first transmission occasion of the corresponding PSFCH is located in the PSFCH transmission resource subset 0 in slot 2; the second transmission occasion of the corresponding PSFCH is located in the PSFCH transmission resource subset 1 in slot 3, the third transmission occasion of the corresponding PSFCH is located in the PSFCH transmission resource subset 2 in slot 4, and the fourth transmission occasion of the corresponding PSFCH is located in the PSFCH transmission resource subset 3 in slot 5. On the other hand, for the four transmission resource subsets of PSFCH in slot 5, the PSFCH in transmission resource subset 0 corresponds to PSSCH3 transmitted in slot 3, the PSFCH in transmission resource subset 1 corresponds to PSSCH2 transmitted in slot 2, the PSFCH in transmission resource subset 2 corresponds to PSSCH1 transmitted in slot 1, and the PSFCH in transmission resource subset 3 corresponds to PSSCH0 transmitted in slot 0.

The PSFCH corresponding to a PSSCH includes M transmission occasions. If a PSFCH slot includes M PSFCH resource subsets, the transmission resource of the m-th PSFCH transmission occasion is located in the m-th resource subset of the m-th PSFCH transmission occasion, where m=1, 2, ..., M. It should be understood that if an index of the PSFCH resource subset starts from 0, the index of the PSFCH resource subset corresponding to the m-th PSFCH resource subset is m-1. If the index of the PSFCH resource subset starts from 1, the index of the PSFCH resource subset corresponding to the m-th PSFCH resource subset is m.

Example 2

In some implementations of the first embodiment, the operation that the terminal device determines, according to the index value m, the PSFCH transmission resource in the PSFCH transmission resource set which is included in the slot where the m-th PSFCH transmission occasion is located includes the following actions.

The terminal device determines that the PSFCH transmission resource of the m-th PSFCH transmission occasion is located in a first resource set in a PSFCH slot where the m-th PSFCH transmission occasion is located. That is, the PSFCH transmission resource of the m-th PSFCH transmission occasion is located in the first resource set.

In some implementations of the first embodiment, the PRBs included in the first resource set may be determined by the following Formula 6:

$$\left[(i + j \cdot P) \cdot M_{\text{subch, slot}}^{\text{PSFCH}} + (m - 1) \cdot M_{\text{PRB, set}}^{\text{PSFCH}}/M , \ (i + 1 + j \cdot P) \cdot M_{\text{subch, slot}}^{\text{PSFCH}} - 1 + \right.$$
$$\left. (m - 1) \cdot M_{\text{PRB, set}}^{\text{PSFCH}}/M\right] \qquad \text{Formula 6}$$

where $i$ represents a slot where the first PSSCH is located, $j$ represents a sub-channel index corresponding to a sub-channel occupied by the first PSSCH (i.e., the PSFCH transmission resource is determined according to indexes of all sub-channels corresponding to the PSSCH frequency-domain resource, which corresponds to the above second mode), or $j$ represents a sub-channel index corresponding to a first sub-channel occupied by the first PSSCH (i.e., the PSFCH transmission resource is determined according to the index of the sub-channel corresponding to the starting position of the PSSCH in the frequency-domain, which corresponds to the above first mode), $i = 0, 1, ... ..., P - 1$, $j = 0, 1, ......, N_{\text{subch}} - 1$, $P$ represents a PSFCH period, $M_{\text{subch, slot}}^{\text{PSFCH}} = M_{\text{PRB, set}}^{\text{PSFCH}}/(M \cdot N_{\text{subch}} \cdot P)$, $M_{\text{PRB, set}}^{\text{PSFCH}}$ represents a number of PRBs, available for PSFCH transmission, configured in the PSFCH slot, M represents a number of PSFCH transmission occasions corresponding to the first PSSCH, and $N_{\text{subch}}$ represents a number of sub-channels comprised in a resource pool, m is a positive integer and $1 \le m \le M$.

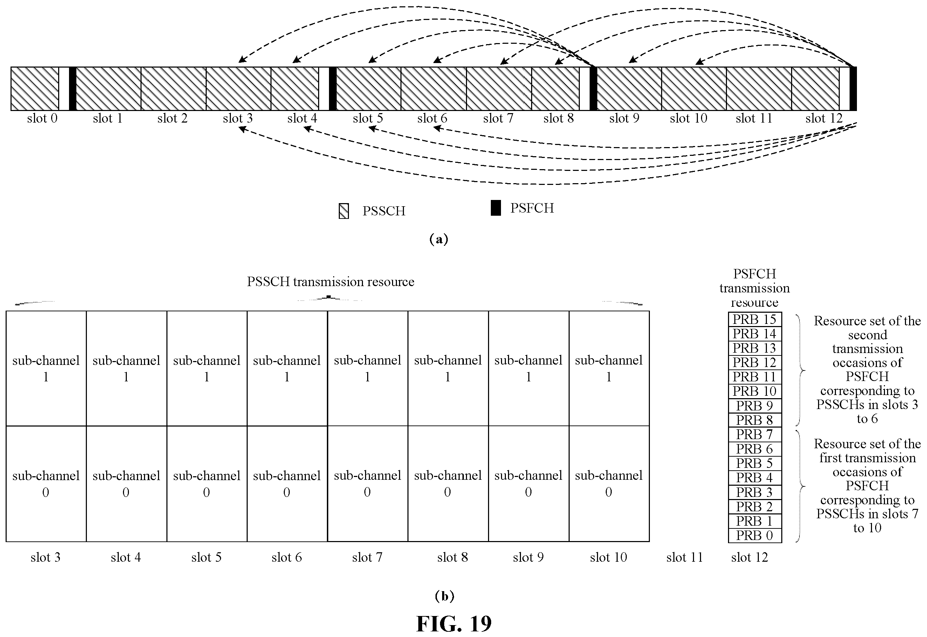

In a specific example, as illustrated in FIG. 19(a), the resource pool configuration information configures P=4, $T_{\text{gap}}$=2, and M=2. The PSFCH is located in slot 0, slot 4, slot 8, slot 12, etc., and the PSFCH corresponding to the PSSCHs transmitted in slot 3, slot 4, slot 5 and slot 6 is located in slot 8, that is, the first PSFCH transmission occasion is located in slot 8. The second PSFCH transmission occasion corresponding to the PSSCHs transmitted in slot 3, slot 4, slot 5 and slot 6 is located in slot 12. The first PSFCH transmission occasion corresponding to the PSSCHs transmitted in slot 7, slot 8, slot 9 and slot 10 is located in slot 12, and the second PSFCH transmission occasion corresponding to the PSSCHs transmitted in slot 7, slot 8, slot 9 and slot 10 is located in slot 16 (not illustrated in the figure). Therefore, the PSFCH in slot 12 includes the first PSFCH transmission occasion corresponding to the PSSCHs transmitted in slot 7, slot 8, slot 9 and slot 10, and also includes the second PSFCH transmission occasion corresponding to the PSSCHs transmitted in slot 3, slot 4, slot 5 and slot 6. The resource pool includes two sub-channels, and the slot, where the PSFCH is located, configured by the resource pool configuration information includes 16 PRBs for transmitting the PSFCH, as illustrated in FIG. 19(b).

$M_{\text{PRB, set}}^{\text{PSFCH}} = 16$, $N_{\text{subch}}$ = 2, P=4, M=2, therefore, $M_{\text{subch, slot}}^{\text{PSFCH}} = M_{\text{PRB, set}}^{\text{PSFCH}}/(M \cdot N_{\text{subch}} \cdot P) = 1$. It may be determined based on the above Formula 6 that the PSFCH transmission resource set, corresponding to the first PSFCH transmission occasion corresponding to the PSSCHs transmitted in slot 7, slot 8, slot 9 and slot 10, includes PRBs [0, 7], that is, PRB #0 to PRB #7. The PSFCH transmission resource set, corresponding to the second PSFCH transmission occasion corresponding to the PSSCHs transmitted in slot 3, slot 4, slot 5 and slot 6, includes PRBs [8, 15], that is, PRB #8 to PRB #15.

In another specific example, the resource pool configuration information may configure P=4, $T_{\text{gap}}$=2 and M=4, the resource pool includes two sub-channels, and the slot, where the PSFCH is located, configured by the resource pool configuration information includes 32 PRBs for PSFCH transmission. The first PSFCH transmission occasion corresponding to the PSSCHs transmitted in slot 3, slot 4, slot 5 and slot 6 is located in slot 8. The second PSFCH transmission occasion corresponding to the PSSCHs transmitted in slot 3, slot 4, slot 5 and slot 6 is located in slot 12. The third PSFCH transmission occasion corresponding to the PSSCHs transmitted in slot 3, slot 4, slot 5 and slot 6 is located in slot 16, and the fourth PSFCH transmission occasion corresponding to the PSSCHs transmitted in slot 3, slot 4, slot 5 and slot 6 is located in slot 20. On the other hand, The PSFCH transmitted in slot 20 includes: the first PSFCH transmission occasion corresponding to the PSSCHs transmitted in slot 15, slot 16, slot 17 and slot 18; the second PSFCH transmission occasion corresponding to the PSSCHs transmitted in slot 11, slot 12, slot 13 and slot 14; the third PSFCH transmission occasion corresponding to the PSSCHs transmitted in slot 7, slot 8, slot 9 and slot 10; and the fourth PSFCH transmission occasion corresponding to the PSSCHs transmitted in slot 3, slot 4, slot 5 and slot 6. $M_{\mathrm{PRB,\ set}}^{\mathrm{PSFCH}} = 32$ , $N_{\mathrm{subch}}$ = 2, P=4, M=4, therefore, $M_{\mathrm{subch,\ slot}}^{\mathrm{PSFCH}} = M_{\mathrm{PRB,\ set}}^{\mathrm{PSFCH}}/(M \cdot N_{\mathrm{subch}} \cdot P) = 1$ , it may be determined based on the above Formula 6 that the PSFCH transmission resource set, corresponding to the first PSFCH transmission occasion corresponding to the PSSCHs transmitted in slot 15, slot 16, slot 17 and slot 18, includes [0, 7] PRB in the PSFCH transmission resource set of slot 20, that is, PRB #0 to PRB #7. The PSFCH transmission resource set, corresponding to the second PSFCH transmission occasion corresponding to the PSSCHs transmitted in slot 11, slot 12, slot 13 and slot 14, includes [8, 15] PRB, that is, PRB #8 to PRB #15. The PSFCH transmission resource set, corresponding to the third PSFCH transmission occasion corresponding to the PSSCHs transmitted in slot 7, slot 8, slot 9 and slot 10, includes [16, 23] PRB, that is, PRB #16 to PRB #23. The PSFCH transmission resource set, corresponding to the second PSFCH transmission occasion corresponding to the PSSCHs transmitted in slot 3, slot 4, slot 5 and slot 6, includes[24, 31] PRB, that is, PRB #24 to PRB #31.

In some implementations of the first embodiment, if the RB included in the first transmission resource set is denoted as $M_{\mathrm{set}}$, the PSFCH transmission resource set included in the m-th PSFCH transmission occasion corresponding to PSSCH is:

$$R_{\mathrm{PRB,\ CS}}^{\mathrm{PSFCH}} = N_{\mathrm{type}}^{\mathrm{PSFCH}} \cdot M_{\mathrm{set}} \cdot N_{\mathrm{CS}}^{\mathrm{PSFCH}} \qquad \text{Formula 7}$$

where $N_{\mathrm{CS}}^{\mathrm{PSFCH}}$ represents a cyclic shift pair supported in the PRB of a PSFCH. $N_{\mathrm{type}}^{\mathrm{PSFCH}}=1$ , or $N_{\mathrm{type}}^{\mathrm{PSFCH}}=N_{\mathrm{subch}}^{\mathrm{PSSCH}}$, $N_{\mathrm{subch}}^{\mathrm{PSSCH}}$ is the number of sub-channels occupied by the PSSCH. Further, the transmission resources of the PSFCH in the PSFCH transmission resource set are determined by using the above Formula 4, and will not be elaborated herein again.

Example 3

In some implementations of the first embodiment, the operation that the terminal device determines, according to the index value m, the PSFCH transmission resource in the PSFCH transmission resource set which is included in the slot where the m-th PSFCH transmission occasion is located includes the following actions.

The terminal device determines the PSFCH transmission resource in the PSFCH transmission resource set which is included in the slot where the m-th PSFCH transmission occasion is located according to the ID information of the transmitting end terminal for the first PSSCH, the member ID of the terminal device in a communication group and the index value m.

In some implementations of the first embodiment, the terminal device determines the PSFCH transmission resource in the PSFCH transmission resource set which is included in the slot where the m-th PSFCH transmission occasion is located by the following Formula 8:

$$\left(P_{\mathrm{ID}} + M_{\mathrm{ID}} + K2 \cdot (m - 1)\right) mod R_{\mathrm{PRB,\ CS}}^{\mathrm{PSFCH}} \qquad \text{Formula 8}$$

where $P_{\mathrm{ID}}$ represents ID information of the transmitting device for the first PSSCH, $M_{\mathrm{ID}}$ represents the member ID of the terminal device in the communication group, or $M_{\mathrm{ID}}$ = 0, K2 is determined by pre-definition, pre-configuration or configuration information from a network device. In some implementations, $R_{\mathrm{PRB,\ CS}}^{\mathrm{PSFCH}}$ is determined by the above Formula 1 to Formula 3, for example, the Formula 3, $R_{\mathrm{PRB,\ CS}}^{\mathrm{PSFCH}} = N_{\mathrm{type}}^{\mathrm{PSFCH}} \cdot M_{\mathrm{subch,\ slot}}^{\mathrm{PSFCH}} \cdot N_{\mathrm{CS}}^{\mathrm{PSFCH}}$ . $N_{\mathrm{type}}^{\mathrm{PSFCH}}$ is equal to 1, or $N_{\mathrm{type}}^{\mathrm{PSFCH}}$ is equal to $N_{\mathrm{subch}}^{\mathrm{PSSCH}}$ , $N_{\mathrm{subch}}^{\mathrm{PSSCH}}$ represents the number of sub-channels corresponding to the a frequency-domain resource size occupied by the first PSSCH, $M_{\text{subch, slot}}^{\text{PSFCH}} = M_{\text{PRB, set}}^{\text{PSFCH}} / \left( N_{\text{subch}} \cdot N_{\text{PSSCH}}^{\text{PSFCH}} \right)$

according to the Formula 1, where $N_{\text{PSSCH}}^{\text{PSFCH}} = P$, $P$ represents a PSFCH period, $M_{\text{PRB, set}}^{\text{PSFCH}}$ represents the number of PRBs, available for PSFCH transmission, configured in a PSFCH slot, $N_{\text{subch}}$ represents a number of sub-channels comprised in a resource pool, $N_{\text{CS}}^{\text{PSFCH}}$ represents a configured number of cyclic shift pairs, m is a positive integer and $1 \leq m \leq M$, and *mod* represents a modulo operation.

For example, K2=1. Optionally, the default value K2=1, or K2=1 is predefined, i.e., K2=1 when K2 is not pre-configured or network-configured.

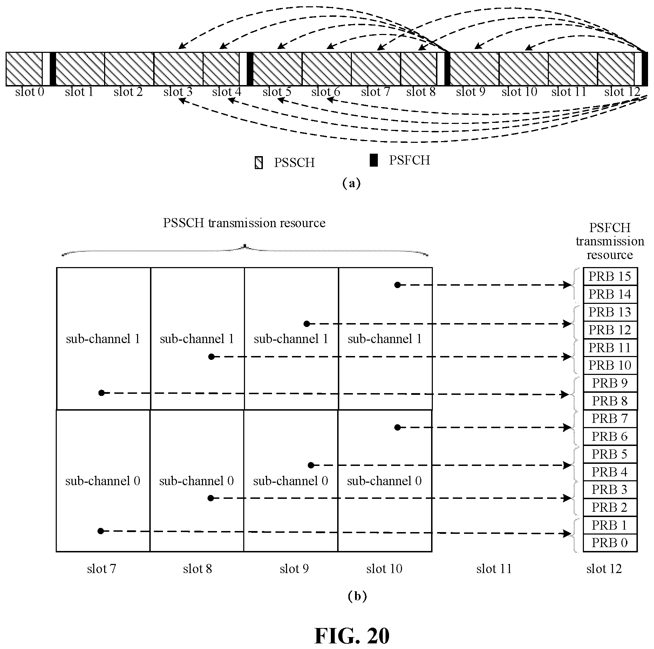

For example, as illustrated in FIG. 20(a), the resource pool configuration information configures P=4, T$_{gap}$=2, and M=2. The PSFCH is located in slot 0, slot 4, slot 8, slot 12, etc., and the PSFCH corresponding to the PSSCHs transmitted in slot 3, slot 4, slot 5 and slot 6 is located in slot 8, that is, the first PSFCH transmission occasion is located in slot 8. The second PSFCH transmission occasion corresponding to the PSSCHs transmitted in slot 3, slot 4, slot 5 and slot 6 is located in slot 12. The first PSFCH transmission occasion corresponding to the PSSCHs transmitted in slot 7, slot 8, slot 9 and slot 10 is located in slot 12, and the second PSFCH transmission occasion corresponding to the PSSCHs transmitted in slot 7, slot 8, slot 9 and slot 10 is located in slot 16 (not illustrated in the figure). Therefore, the PSFCH in slot 12 includes the first PSFCH transmission occasion corresponding to the PSSCHs transmitted in slot 7, slot 8, slot 9 and slot 10, and also includes the second PSFCH transmission occasion corresponding to the PSSCHs transmitted in slot 3, slot 4, slot 5 and slot 6. The resource pool includes two sub-channels. The slot, where the PSFCH is located, configured by the resource pool configuration information includes 16 PRBs for transmitting the PSFCH, as illustrated in FIG. 20(b).

Specifically, $M_{\text{PRB, set}}^{\text{PSFCH}} = 16$, $N_{\text{subch}} = 2$, $N_{\text{PSSCH}}^{\text{PSFCH}} = 4$, therefore, $M_{\text{subch, slot}}^{\text{PSFCH}} = M_{\text{PRB, set}}^{\text{PSFCH}} / \left( N_{\text{subch}} \cdot N_{\text{PSSCH}}^{\text{PSFCH}} \right) = 2$ according to the above Formula 1. Based on the above Formula 2, it may be determined that the PSFCH resource set corresponding to sub-channel 0 in slot 7 includes [0, 1] PRB, i.e. PRB #0 to PRB #1, the PSFCH resource set corresponding to sub-channel 0 in slot 8 includes [2, 3] PRB, i.e., PRB #2 to PRB #3, and so on, as illustrated in FIG. 20(b). Based on the above Formula 3, it may be determined that the PSFCH transmission resource set corresponding to the PSSCH transmitted in one slot includes $R_{\text{PRB, CS}}^{\text{PSFCH}}$ pieces of PSFCH transmission resources with indexes $0, 1, 2, ..., R_{\text{PRB, CS}}^{\text{PSFCH}} - 1$, where $R_{\text{PRB, CS}}^{\text{PSFCH}} = N_{\text{type}}^{\text{PSFCH}} \cdot M_{\text{subch, slot}}^{\text{PSFCH}} \cdot N_{\text{CS}}^{\text{PSFCH}}$. Optionally, $N_{\text{type}}^{\text{PSFCH}} = 1$, if $N_{\text{CS}}^{\text{PSFCH}} = 1$, then $R_{\text{PRB, CS}}^{\text{PSFCH}} = 2$. Further, the PSFCH transmission resource corresponding to the m-th PSFCH transmission occasion may be determined based on the above Formula 8.

As illustrated in FIG. 20, the PSFCH transmission resource in slot 12 includes the first PSFCH transmission occasion corresponding to the PSSCHs transmitted in slot 7, slot 8, slot 9 and slot 10 (i.e., the slot set 1), and also includes the second PSFCH transmission occasion corresponding to the PSSCHs transmitted in slot 3, slot 4, slot 5 and slot 6 (i.e., the slot set 2). In addition, two PSSCH slot sets correspond to the same PSFCH transmission resource set. For example, the PSFCH resource set [0, 1] PRB (i.e., PRB #0 and PRB #1) in slot 12 corresponds to the PSSCH in the sub-channel 0 in slot 7, and also corresponds to the PSSCH in the sub-channel 0 in slot 3. According to the above Formula 8, PSFCH transmission resources corresponding to different PSFCH transmission occasions may be determined respectively. If $P_{\text{ID}} = 0$, $M_{\text{ID}} = 0$, then the second PSFCH transmission occasion corresponding to PSSCH in slot 3 corresponds to a PSFCH resource index 1 in slot 12, that is, corresponds to PRB #1. The first PSFCH transmission occasion corresponding to the PSSCH in slot 7 corresponds to the PSFCH resource index 0 in slot 12, i.e. corresponds to PRB #0.

Example 4

In some implementations of the first embodiment, the terminal device determines a PSFCH transmission resource set, in a slot including a PSFCH transmission resource, corresponding to the first PSSCH according to a number of slots of all PSSCHs associated with a PSFCH transmission slot.

In some implementations of first embodiment, in a slot of a PSFCH corresponding to the first PSSCH, the PSFCH corresponding to the first PSSCH is located in a second resource set.

In some implementations of the first embodiment, the PRBs included in the second resource set may be determined by the following Formula 9:

$$\left[\left(i + j \cdot N_{\mathrm{PSSCH}}^{\mathrm{PSFCH}}\right) \cdot M_{\mathrm{subch,\ slot}}^{\mathrm{PSFCH}},\ \left(i + 1 + j \cdot N_{\mathrm{PSSCH}}^{\mathrm{PSFCH}}\right) \cdot M_{\mathrm{subch,\ slot}}^{\mathrm{PSFCH}} - 1\right] \qquad \text{Formula 9}$$

where $i$ represents a slot where the first PSSCH is located, $j$ represents a sub-channel index corresponding to a sub-channel occupied by the first PSSCH (i.e., the PSFCH transmission resource is determined according to indexes of all sub-channels corresponding to the PSSCH frequency-domain resource, which corresponds to the above second mode), or $j$ represents a sub-channel index corresponding to a first sub-channel occupied by the first PSSCH (i.e., the PSFCH transmission resource is determined according to the index of the sub-channel corresponding to the starting position of the PSSCH in the frequency-domain, which corresponds to the above first mode), $i = 0, 1, \ldots \ldots, N_{\mathrm{PSSCH}}^{\mathrm{PSFCH}} - 1$, $j = 0, 1, \quad \ldots \quad \ldots \quad, \quad N_{\mathrm{subch}} \quad - \quad 1, \qquad N_{\mathrm{PSSCH}}^{\mathrm{PSFCH}} = M \cdot P$, $P$ represents a PSFCH period, $M_{\mathrm{subch,\ slot}}^{\mathrm{PSFCH}} = M_{\mathrm{PRB,\ set}}^{\mathrm{PSFCH}} / \left(N_{\mathrm{subch}} \cdot N_{\mathrm{PSSCH}}^{\mathrm{PSFCH}}\right)$, M represents a number of PSFCH transmission occasions corresponding to the first PSSCH, $M_{\mathrm{PRB,\ set}}^{\mathrm{PSFCH}}$ represents a number of PRBs, available for PSFCH transmission, configured in the PSFCH slot, and $N_{\mathrm{subch}}$ represents a number of sub-channels comprised in a resource pool, m is a positive integer and $1 \le m \le M$.

In a specific example, as illustrated in FIG. 20(a), the resource pool configuration information configures P=4, $T_{\mathrm{gap}}$=2, and M=2. The PSFCH is located in slot 0, slot 4, slot 8, slot 12, etc., and the PSFCH corresponding to the PSSCHs transmitted in slot 3, slot 4, slot 5 and slot 6 is located in slot 8, that is, the first PSFCH transmission occasion is located in slot 8. The second PSFCH transmission occasion corresponding to the PSSCHs transmitted in slot 3, slot 4, slot 5 and slot 6 is located in slot 12. The first PSFCH transmission occasion corresponding to the PSSCHs transmitted in slot 7, slot 8, slot 9 and slot 10 is located in slot 12, and the second PSFCH transmission occasion corresponding to the PSSCHs transmitted in slot 7, slot 8, slot 9 and slot 10 is located in slot 16 (not illustrated in the figure). Therefore, the PSFCH in slot 12 includes the first PSFCH transmission occasion corresponding to the PSSCHs transmitted in slot 7, slot 8, slot 9 and slot 10, and also includes the second PSFCH transmission occasion corresponding to the PSSCHs transmitted in slot 3, slot 4, slot 5 and slot 6. The resource pool includes two sub-channels, and the slot, where the PSFCH is located, configured by the resource pool configuration information includes 16 PRBs for transmitting the PSFCH.

Specifically, $M_{\mathrm{PRB,\ set}}^{\mathrm{PSFCH}} = 16$, $N_{\mathrm{subch}}$ $j = 2$, $N_{\mathrm{PSSCH}}^{\mathrm{PSFCH}} = M \cdot P = 8$. Therefore, $M_{\mathrm{subch,\ slot}}^{\mathrm{PSFCH}} = M_{\mathrm{PRB,\ set}}^{\mathrm{PSFCH}} / \left(N_{\mathrm{subch}} \cdot N_{\mathrm{PSSCH}}^{\mathrm{PSFCH}}\right) = 1$. According to the above Formula 9, i = 0, 1, ..., 7; j = 0, 1. The PSFCH resource set corresponding to sub-channel 0 in slot 3 includes PRB #0 in slot 12, the PSFCH resource set corresponding to sub-channel 0 in slot 4 includes PRB #1 in slot 12, the PSFCH resource set corresponding to sub-channel 0 in slot 5 includes PRB #2 in slot 12, the PSFCH resource set corresponding to sub-channel 0 in slot 6 includes PRB #3 in slot 12, the PSFCH resource set corresponding to sub-channel 0 in slot 7 includes PRB #4 in slot 12, the PSFCH resource set corresponding to sub-channel 0 in slot 7 includes PRB #5 in slot 12, the PSFCH resource set corresponding to sub-channel 0 in slot 9 includes PRB #6 in slot 12, the PSFCH resource set corresponding to sub-channel 0 in slot 10 includes PRB #7 in slot 12. The PSFCH resource set corresponding to sub-channel 1 in slot 3 includes PRB #8 in slot 12, the PSFCH resource set corresponding to sub-channel 1 in slot 4 includes PRB #9 in slot 12, the PSFCH resource set corresponding to sub-channel 1 in slot 5 includes PRB #10 in slot 12, the PSFCH resource set corresponding to sub-channel 1 in slot 6 includes PRB #11 in slot 12, the PSFCH resource set corresponding to sub-channel 1 in slot 7 includes PRB #12 in slot 12, the PSFCH resource set corresponding to sub-channel 1 in slot 7 includes PRB #13 in slot 12, the PSFCH resource set corresponding to sub-channel 1 in slot 9 includes PRB #14 in slot 12, the PSFCH resource set corresponding to sub-channel 0 in slot 10 includes PRB #15 in slot 12. Further, the PSFCH resource set included in a PSSCH which is transmitted in one slot may be determined based on the above Formula 3, and then a PSFCH transmission resource, in the PSFCH resource set, corresponding to the PSSCH may be determined based on the above Formula 4.

In a second embodiment, the terminal device determines the M PSFCH transmission occasions corresponding to the first PSSCH according to M sets of PSFCH transmission resources configured in a time domain. The M sets of PSFCH transmission resources respectively correspond to the M PSFCH transmission occasions, and each set of PSFCH transmission resources in the M sets of PSFCH transmission resources has a same period. Specifically, in the above S210, the terminal device determines the M PSFCH transmission occasions corresponding to the first PSSCH according to the M sets of PSFCH transmission resources configured in the time domain.

It should be noted that, parameters included in different sets of PSFCH transmission resources in the M sets of PSFCH transmission resources are of a same type, but some or all of these parameters included in different sets of PSFCH transmission resources have different values.

In a specific example, when the PSFCH period is P slots, configuration of at most P sets of PSFCH transmission resources in the time domain may be supported (i.e., M=P), and the period of each set of PSFCH transmission resources is P slots.

In some implementations of the second embodiment, different sets of PSFCH transmission resources in the M sets of PSFCH transmission resources correspond to different time-domain offsets. The time-domain offset is used for determining a slot where a PSFCH transmission resource, in each set of PSFCH transmission resources within a system frame number (SFN) period or a direct frame number (DFN) period, is located.

In some implementations of the second embodiment, the time-domain offset corresponding to a k-th set of PSFCH transmission resources in the M sets of PSFCH transmission resources is $T_{k\_offset}$, and the slot, where the PSFCH transmission resource within the SFN period or the DFN period is located, determined according to $T_{k\_offset}$ corresponding to the k-th set of PSFCH transmission resources is a slot k satisfying the following Formula 10:

$$\left(k - T_{k\_offset}\right) mod\ P = 0 \qquad \text{Formula 10}$$

where P represents a PSFCH period and *mod* represents a modulo operation. The slot(s) k satisfying the Formula 10 constitutes a set of PSFCH transmission resources in the time domain.

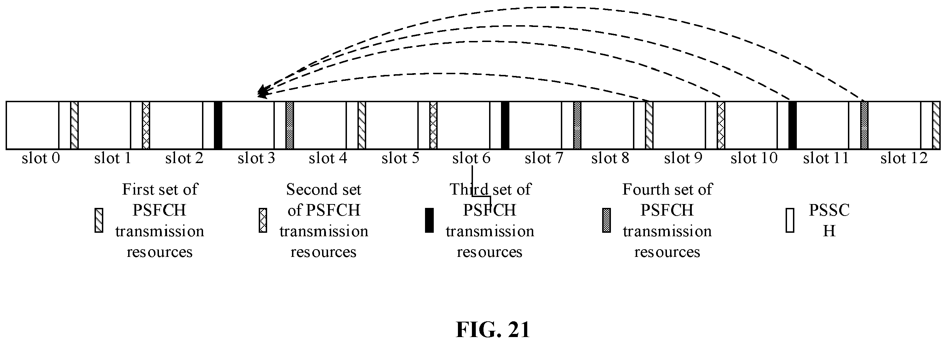

For example, as illustrated in FIG. 21, the PSFCH period is four slots, and four sets of PSFCH transmission resources are configured in FIG. 21. The time-domain offsets corresponding to the four sets of PSFCH transmission resources are 0 slot, 1 slot, 2 slots and 3 slots, respectively. Specifically, PSFCH transmission resources of the first set of PSFCH transmission resources are located in slot 0, slot 4, slot 8, slot 12, etc. PSFCH transmission resources of the second set of PSFCH transmission resources are located in slot 1, slot 5, slot 9, etc. PSFCH transmission resources of the third set of PSFCH transmission resources are located in slot 2, slot 6, slot 10, etc. PSFCH transmission resources of the fourth set of PSFCH transmission resources are located in slot 3, slot 7, slot 11, etc.

In some implementations of the second embodiment, the terminal device determines a first PSFCH slot in an S-th set of PSFCH transmission resources in the M sets of PSFCH transmission resources according to PSFCH configuration information and slot information of the first PSSCH. A time-domain offset corresponding to the S-th set of PSFCH transmission resources is 0, and the first PSFCH slot is a slot corresponding to the first PSFCH transmission occasion in the M PSFCH transmission occasions. The terminal device determines M-1 slots, including PSFCH transmission resources, after the slot corresponding to the first PSFCH transmission occasion as slots corresponding to remaining M-1 PSFCH transmission occasions in the M PSFCH transmission occasions, respectively.

That is, $T_{s\_offset}$ = 0. According to the above Formula 10, the slot, where the PSFCH transmission resource is located within the determined SFN period or DFN period, determined according to $T_{s\_offset}$ corresponding to the s-th set of PSFCH transmission resources may be determined as the slot s satisfying *s mod P* = 0.

In a specific example, as illustrated in FIG. 21, the PSFCH period is four slots, and four sets of PSFCH transmission resources are configured in FIG. 21, in which the time-domain offset corresponding to the first set of PSFCH transmission resources is 0. If the minimum time gap between the PSSCH and the PSFCH corresponding to the PSSCH is two slots, the PSFCH corresponding to the PSSCH transmitted in slot 3 is located in the first slot, including PSFCH transmission resources, of the slots (including slot 5) after slot 5 and belongs to the PSFCH slots in the first set of PSFCH transmission resources. Therefore, the PSFCH corresponding to the PSSCH transmitted in slot 3 may be determined to be located in slot 8, which is determined as the first transmission occasion of the PSFCH, and the PSFCH slots (i.e., the slots belonging to the second set of PSFCH transmission resource, the third set of PSFCH transmission resource and the fourth set of PSFCH transmission resource respectively correspond to the PSFCH transmission resources in slot 9, slot 10 and slot 11) after this slot are determined as the second transmission occasion, the third transmission occasion and the fourth transmission occasion of the PSFCH, respectively.

In some implementations of second embodiment, in the M sets of PSFCH transmission resources, the first set of PSFCH transmission resources corresponds to the first transmission occasion of PSFCH, the second set of PSFCH transmission resources corresponds to the second transmission occasion of PSFCH, and so on. Therefore, the transmission resource of PSFCH in each set of PSFCH transmission resources can be determined by using the above-mentioned Formulas 1 to 4. Details will not be elaborated herein again.

In some implementations in the second embodiment, the terminal device determines, in the M sets of PSFCH transmission resources, a slot corresponding to the first PSFCH transmission occasion in the M PSFCH transmission occasions according to a slot where the first PSSCH is located and a minimum time gap between the first PSSCH and a PSFCH associated with the first PSSCH; and the terminal device determines M-1 slots, including PSFCH transmission resources, after the slot corresponding to the first PSFCH transmission occasion, as the slots corresponding to remaining M-1 PSFCH transmission occasions in the M PSFCH transmission occasions, respectively.

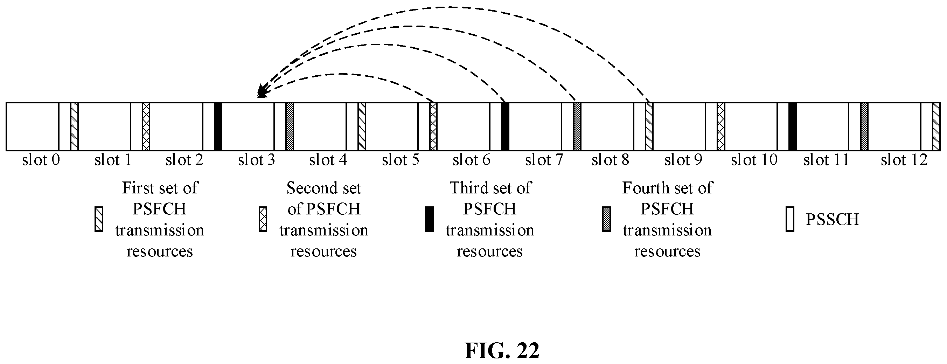

In a specific example, as illustrated in FIG. 22, the PSFCH period is four slots, and four sets of PSFCH transmission resources are configured in FIG. 22. The minimum time gap between the PSSCH and the PSFCH corresponding to the PSSCH is two slots. For the PSSCH transmitted in slot 3, the PSFCH corresponding to the PSSCH is located in the first slot, including PSFCH transmission resources, of the slots (including slot 5) after slot 5, i.e., the PSFCH corresponding to the PSSCH transmitted in slot 3 is located in slot 5. Therefore, the PSFCH in slot 5 corresponds to the first transmission occasion of PSFCH, and the slots including PSFCH after the slot 5 correspond to the second PSFCH transmission occasion, the third PSFCH transmission occasion and the fourth PSFCH transmission occasion, respectively. That is, PSFCHs in slot 6, slot 7, slot 8 corresponding to the second transmission occasion, the third transmission occasion and the fourth transmission occasion of the PSFCH, respectively.

In some implementations of the second embodiment, the terminal device determines, according to an index value m, a PSFCH transmission resource in a PSFCH transmission resource set which is included in the slot where the m-th PSFCH transmission occasion in the M PSFCH transmission occasions is located, m is a positive integer and $2 \leq m \leq M$.

In some implementations of the second embodiment, a PSFCH transmission slot includes M PSFCH resource subsets. For example, different PSFCH resource subsets correspond to different PSFCH transmission occasions, respectively. Optionally, M PSFCH resource subsets correspond to M PSFCH transmission occasions one by one. In some embodiments, M PSFCH resource subsets in the PSFCH transmission slot correspond to different frequency-domain resource, respectively.

In some implementations of the second embodiment, in case that M PSFCH resource subsets are included in a PSFCH transmission slot, the operation that the terminal device determines, according to the index value m, the PSFCH transmission resource in the PSFCH transmission resource set which is included in the slot where the m-th PSFCH transmission occasion is located includes the following actions.

The terminal device determines that the PSFCH transmission resource of the m-th PSFCH transmission occasion corresponding to the first PSSCH is located in an m-th PSFCH resource subset in the slot where the m-th PSFCH transmission occasion is located. Alternatively, the terminal device determines that the PSFCH transmission resource of the m-th PSFCH transmission occasion corresponding to the first PSSCH is located in an (M-m+1)-th PSFCH resource subset in the slot where the m-th PSFCH transmission occasion is located.

For example, a set of PSFCHs may correspond to different PSFCH transmission occasions, and these different PSFCH transmission occasions correspond to PSFCHs associated with PSSCHs transmitted in different slots. As illustrated in FIG. 22, the PSFCH in slot 8 correspond to the fourth transmission occasion of PSFCH corresponding to the PSSCH in slot 3, the third transmission occasion of PSFCH corresponding to the PSSCH in slot 4, the second transmission occasion of PSFCH corresponding to the PSSCH in slot 5, and the first transmission occasion of PSFCH corresponding to the PSSCH in slot 6. The transmission resources in a PSFCH slot are divided into M PSFCH resource subsets, and different PSFCH transmission occasions correspond to different PSFCH resource subsets, respectively. Since M sets of PSFCH transmission resources are configured in the time domain, each PSFCH resource subset in one PSFCH slot includes PSFCH corresponding to the PSSCHs transmitted in (P/M) slots.

In some implementations of the second embodiment, the terminal device determines the PSFCH transmission resource in the m-th PSFCH resource subset in the slot where the m-th PSFCH transmission occasion is located according to at least one of: a sub-channel index corresponding to a frequency-domain starting position of the first PSSCH; a number of sub-channels corresponding to a frequency-domain resource size occupied by the first PSSCH; slot information of the first PSSCH; ID information of a transmitting device for the first PSSCH; or ID information of the terminal device.

In some implementations of the second embodiment, the terminal device determines, in a slot including a PSFCH transmission resource, a PSFCH transmission resource set corresponding to the first PSSCH according to a number of slots of all PSSCHs associated with a PSFCH transmission slot.

In some implementations of the second embodiment, a PSFCH corresponding to the first PSSCH is located in a third resource set in a slot of the PSFCH corresponding to the first PSSCH.

In some implementations of the second embodiment, the PRBs included in the third resource set may be determined by the following Formula 11:

$$\left[\left(i + j \cdot N_{\text{PSSCH}}^{\text{PSFCH}}\right) \cdot M_{\text{subch, slot}}^{\text{PSFCH}}, \ \left(i + 1 + j \cdot N_{\text{PSSCH}}^{\text{PSFCH}}\right) \cdot M_{\text{subch, slot}}^{\text{PSFCH}} - 1\right] \qquad \text{Formula 11}$$

where i represents a slot where the first PSSCH is located, j represents a sub-channel index corresponding to a sub-channel occupied by the first PSSCH (i.e., the PSFCH transmission resource is determined according to indexes of all sub-channels corresponding to the PSSCH frequency-domain resource, which corresponds to the above second mode), or j represents a sub-channel index corresponding to a first sub-channel occupied by the first PSSCH (i.e., the PSFCH transmission resource is determined according to the index of the sub-channel corresponding to the starting position of the PSSCH in the frequency-domain, which corresponds to the above first mode), $i = 0, 1, \ldots \ldots, N_{\text{PSSCH}}^{\text{PSFCH}} - 1$, $j = 0, 1, \ldots \ldots, N_{\text{subch}} - 1$, $N_{\text{PSSCH}}^{\text{PSFCH}} = P$, P represents a PSFCH period,

$$M_{\text{subch, slot}}^{\text{PSFCH}} = M_{\text{PRB, set}}^{\text{PSFCH}} / \left( N_{\text{subch}} \cdot N_{\text{PSSCH}}^{\text{PSFCH}} \right), \quad M_{\text{PRB, set}}^{\text{PSFCH}}$$ represents a number of PRBs, available for PSFCH transmission, configured in the PSFCH slot, M represents a number of PSFCH transmission occasions corresponding to the first PSSCH, and $N_{\text{subch}}$ represents a number of sub-channels in a resource pool, m is a positive integer and $1 \le m \le M$.

In some implementations of second embodiment, the terminal device may determine the PSFCH transmission resource in the third resource set according to the above Formula 3 and Formula 4.

In a third embodiment, the above-mentioned first embodiment and second embodiment are combined. As a result, K3 sets of PSFCH transmission resources may be configured in the time domain, which correspond to K3 PSFCH transmission occasions, respectively. In one PSFCH slot, K4 PSFCH transmission occasions may be determined in any of the above-mentioned first to fourth examples, which correspond to different PSFCH transmission occasions. In other words, M in the above-mentioned first to fourth examples is replaced with K4, where K3 and K4 are positive integers, and $K3 \times K4 = M$.

In a specific example, if the PSFCH period is P, at most P sets of PSFCH transmission resources can be configured in the time domain, the P sets of PSFCH transmission resources correspond to P PSFCH transmission occasions, respectively. For example, if P=4, at most four sets of PSFCH transmission resources can be configured in the time domain, which correspond to four PSFCH transmission occasions, respectively, as illustrated in FIG. 21 and FIG. 22. If P=2, at most two sets of PSFCH transmission resources can be configured in the time domain, which correspond to two PSFCH transmission occasions, respectively. If P=1, multiple sets of PSFCH transmission resources cannot be configured in the time domain in the manner of the second embodiment, and multiple transmission occasions of PSFCH may only be realized in the manner of the first embodiment. Therefore, in the manner of the second embodiment described above, the PSFCH period P defines the number of transmission occasions of the PSFCH. The number of PSFCH transmission occasions cannot be configured more flexibly.

In order to support flexible configuration of the number of PSFCH transmission occasions, for example, four PSFCH transmission occasions may be configured when P=2, and the first embodiment and second embodiment may be combined.

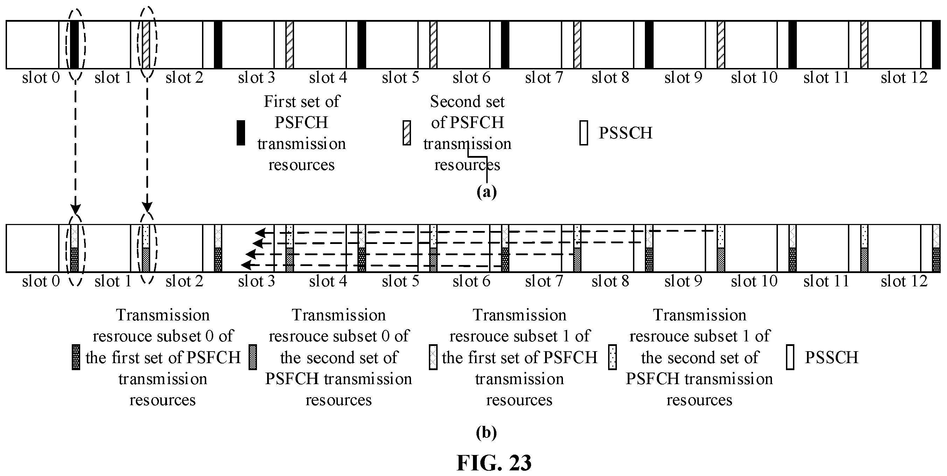

In a specific example, the first example in the above-described first embodiment may be combined with the second embodiment. As illustrated in FIG. 23, the PSFCH period P=2, in order to support configuration of four PSFCH transmission occasions, two sets of PSFCH transmission resources (i.e., K3=2) may be configured in the time domain, as illustrated in FIG. 23(a). Two PSFCH resource subsets (i.e., K4=2) may be configured within each PSFCH slot of each set of PSFCH transmission resources, as illustrated in FIG. 23(b), thereby supporting the configuration of four PSFCH transmission occasions for one PSSCH. The terminal device may determine the slot where the first PSFCH transmission occasion is located according to the slot where the first PSSCH is located and the minimum time gap between the first PSSCH and a PSFCH associated with the first PSSCH. Specifically, for example, according to the method for determining the PSFCH slot in the above-mentioned second embodiment (such as the method corresponding to the FIG. 21), the corresponding first PSFCH slot belongs to the first set of PSFCH transmission resources. Further, the terminal device determines slots where remaining M-1 PSFCH transmission occasions are located according to the slot where the first PSFCH transmission occasion is located and the PSFCH period. Specifically, for example, the slots where the remaining M-1 PSFCH transmission occasions are located are determined according to the above Formula 5, where M represents the PSFCH transmission occasions. For example, the minimum time gap between the PSSCH and its corresponding PSFCH in Fig. 23 is 2 slots. In FIG. 23(b), for the PSSCH transmitted in slot 3, according to the method of determining the PSFCH slot in the above second embodiment (such as the method corresponding to FIG. 21), the first PSFCH slot corresponding to the PSSCH belongs to the first set of PSFCH transmission resources, i.e., located in slot 6, that is, the first transmission occasion of PSFCH. The second transmission occasion of PSFCH located in slot 7 belongs to the second set of PSFCH transmission resources, the third transmission occasion of PSFCH is located in slot 8, and the fourth transmission occasion of PSFCH is located in slot 9. Further, the first transmission occasion of PSFCH is located in the resource subset 0 in slot 6, the second transmission occasion of PSFCH is located in the resource subset 0 in slot 7, the third transmission occasion of PSFCH is located in the resource subset 1 in slot 8, and the fourth transmission occasion of PSFCH is located in the resource subset 1 in slot 9. Further, a specific PSFCH transmission resource within each PSFCH resource subset may be determined based on the above-described Formulas 1 to 4. The method that the terminal determines the specific PSFCH transmission resource in each PSFCH resource subset is the same as the method as described in the first example 1 for determining the PSFCH transmission resource in the m-th resource subset and will not be elaborated herein again.

For another example, the second example 2 in first embodiment may be combined with the second embodiment 2. That is, K3 sets of PSFCH transmission resources (for example, K3=2) are configured in the time domain, and K4 PSFCH transmission occasions (for example, K4=2) are included in each PSFCH slot, so that M (M = K3 × K4) pieces of PSFCH transmission occasions can be configured for one PSSCH. The terminal device may determine the slot where the first PSFCH transmission occasion is located according to the slot where the first PSSCH is located and the minimum time gap between the first PSSCH and a PSFCH associated with the first PSSCH. Specifically, for example, according to the method for determining the PSFCH slot in the above-mentioned second embodiment (such as the method corresponding to the FIG. 21), the corresponding first PSFCH slot belongs to the first set of PSFCH transmission resources. Further, the terminal device determines slots where remaining M-1 PSFCH transmission occasions are located according to the slot where the first PSFCH transmission occasion is located and the PSFCH period. Specifically, for example, the slots where the remaining M-1 PSFCH transmission occasions are located are determined according to the above Formula 5, where M represents the PSFCH transmission occasions. For example, M=4, the PSFCH period P=2, in order to support the configuration of four PSFCH transmission occasions (i.e., M=4), two sets of PSFCH transmission resources (i.e., K3=2) may be configured in the time domain, and each PSFCH slot corresponds to two PSFCH transmission occasions.

Therefore, four PSFCH transmission occasions may be configured for one PSSCH. $T_{gap}$=2, $M_{PRB, set}^{PSFCH} = 8$, $N_{subch}$=2, for the PSSCH transmitted in slot 3, according to the method of determining the PSFCH slot in the above second embodiment (such as the manner corresponding to FIG. 21), the first PSFCH slot corresponding to the PSSCH belongs to the first set of PSFCH transmission resources, i.e., located in slot 6, that is, the first transmission occasion of PSFCH. The second transmission occasion of PSFCH located in slot 7 belongs to the second set of PSFCH transmission resources, the third transmission occasion of PSFCH located in slot 8, and the fourth transmission occasion of PSFCH is located in slot 9. Further, the method of determining the PSFCH transmission resource in the PSFCH slot is the same as the method as described in the second example for determining the PSFCH transmission resource and will not be elaborated herein again.

For another example, the example 3 in first embodiment may be combined with the embodiment 2. That is, K3 sets of PSFCH transmission resources (for example, K3=2) are configured in the time domain, and K4 PSFCH transmission occasions (for example, K4=2) are included in each PSFCH slot, so that M (M = K3 $\times$ K4) pieces of PSFCH transmission occasions can be configured for one PSSCH. The terminal device may determine the slot where the first PSFCH transmission occasion is located according to the slot where the first PSSCH is located and the minimum time gap between the first PSSCH and a PSFCH associated with the first PSSCH. Specifically, for example, according to the method for determining the PSFCH slot in the above-mentioned second embodiment (such as the method corresponding to the FIG. 21), the corresponding first PSFCH slot belongs to the first set of PSFCH transmission resources. Further, the terminal device determines slots where remaining M-1 PSFCH transmission occasions are located according to the slot where the first PSFCH transmission occasion is located and the PSFCH period. Specifically, for example, the slots where the remaining M-1 PSFCH transmission occasions are located are determined according to the above Formula 5, where M represents the PSFCH transmission occasions. For example, M=4, the PSFCH period P=2, in order to support the configuration of four PSFCH transmission occasions (i.e., M=4), two sets of PSFCH transmission resources (i.e., K3=2) may be configured in the time domain, and each PSFCH slot corresponds to two PSFCH transmission occasions.

Therefore, four PSFCH transmission occasions may be configured for one PSSCH, $T_{gap}$=2, $M_{PRB, set}^{PSFCH} = 8$, $N_{subch}$=2. For the PSSCH transmitted in slot 3, according to the method of determining the PSFCH slot in the above second embodiment (such as the method corresponding to FIG. 21), the first PSFCH slot corresponding to the PSSCH belongs to the first set of PSFCH transmission resources, i.e., located in slot 6, that is, the first transmission occasion of PSFCH. The second transmission occasion of PSFCH located in slot 7 belongs to the second set of PSFCH transmission resources, the third transmission occasion of PSFCH located in slot 8, and the fourth transmission occasion of PSFCH is located in slot 9. Further, the method of determining the PSFCH transmission resource in the PSFCH slot is the same as the method as described in the third example for determining the PSFCH transmission resource and will not be elaborated herein again.

For another example, the example 4 in first embodiment may be combined with the embodiment 2. That is, K3 sets of PSFCH transmission resources (for example, K3=2) are configured in the time domain, and K4 PSFCH transmission occasions (for example, K4=2) are included in each PSFCH slot, so that M (M = K3 $\times$ K4) pieces of PSFCH transmission occasions can be configured for one PSSCH. The terminal device may determine the slot where the first PSFCH transmission occasion is located according to the slot where the first PSSCH is located and the minimum time gap between the first PSSCH and a PSFCH associated with the first PSSCH. Specifically, for example, according to the method for determining the PSFCH slot in the above-mentioned second embodiment (such as the method corresponding to the FIG. 21), the corresponding first PSFCH slot belongs to the first set of PSFCH transmission resources. Further, the terminal device determines slots where remaining M-1 PSFCH transmission occasions are located according to the slot where the first PSFCH transmission occasion is located and the PSFCH period. Specifically, for example, the slots where the remaining M-1 PSFCH transmission occasions are located are determined according to the above Formula 5, where M represents the PSFCH transmission occasions. For example, M=4, the PSFCH period P=2, in order to support the configuration of four PSFCH transmission occasions (i.e., M=4), two sets of PSFCH transmission resources (i.e., K3=2) may be configured in the time domain, and each PSFCH slot corresponds to two PSFCH transmission occasions.

Therefore, four PSFCH transmission occasions may be configured for one PSSCH, $T_{gap}$=2, $M_{PRB, set}^{PSFCH} = 8$, $N_{subch}$=2.

For the PSSCH transmitted in slot 3, according to the method of determining the PSFCH slot in the above second embodiment (such as the method corresponding to FIG. 21), the first PSFCH slot (i.e.,) corresponding to the PSSCH belongs to the first set of PSFCH transmission resources, i.e., located in slot 6, that is, the first transmission occasion of PSFCH. The second transmission occasion of PSFCH located in slot 7 belongs to the second set of PSFCH transmission resources, the third transmission occasion of PSFCH is located in slot 8, and the fourth transmission occasion of PSFCH is located in slot 9. Further, the method of determining the PSFCH transmission resource in the PSFCH slot is the same as the method as described in the fourth example for determining the PSFCH transmission resource and will not be elaborated herein again.

Therefore, in the embodiment of the present disclosure, a PSSCH may correspond to multiple PSFCH transmission occasions, thereby increasing transmission occasions of a PSFCH carrying feedback information corresponding to the PSSCH. Therefore, the success rate of PSFCH transmission in the unlicensed spectrum can be improved, so that the terminal device can perform sidelink transmission by using the unlicensed spectrum. Moreover, a case, that the transmission of the PSFCH carrying the feedback information corresponding to the PSSCH is not performed, caused by the channel being non-idle channels can be avoided, and trigger of unnecessary sidelink data retransmission can also be avoided, thereby optimizing the NR SL transmission.

Further, one PSSCH corresponding to multiple PSFCH transmission occasions can be realized by configuring multiple sets of PSFCH transmission resources in the time domain or configuring multiple PSFCH resource subsets in the frequency domain in a PSFCH slot. In addition, the transmission resource of PSFCH is determined in the PSFCH transmission resource set according to the number of all PSSCH slots associated with a PSFCH, or according to the index of PSFCH transmission occasion.

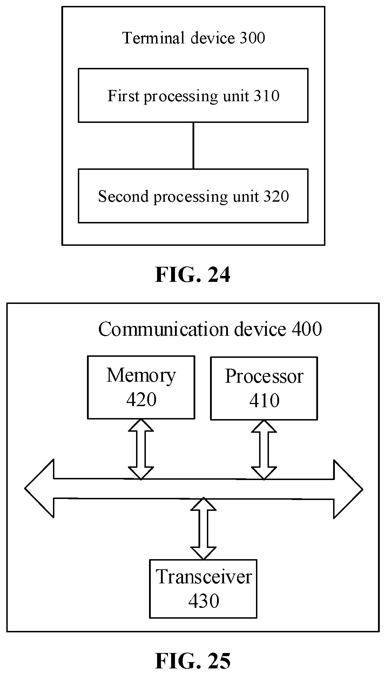

The method embodiments of the present disclosure are described in detail above with reference to FIGS. 16 to 23, and device embodiments of the present disclosure will be described in detail below with reference to FIG. 24. It should be understood that the device embodiments and the method embodiments correspond to each other, and similar descriptions of the device embodiments may refer to the method embodiments.

FIG. 24 illustrates a schematic block diagram of a terminal device 300 according to an embodiment of the disclosure. As illustrated in FIG. 24, the terminal device 300 includes a first processing unit 310 and a second processing unit 320.

The first processing unit 310 is configured to determine M PSFCH transmission occasions corresponding to a first PSSCH. Different PSFCH transmission occasions in the M PSFCH transmission occasions correspond to different time domain resources, respectively.

For an m-th PSFCH transmission occasion in the M PSFCH transmission occasions, the second processing unit 320 is configured to determine, according to a result of a channel access procedure, whether to transmit a PSFCH carrying feedback information corresponding to the first PSSCH by using the m-th PSFCH transmission occasion. M and m are positive integers, $M \geq 2$, and $1 \leq m \leq M$.

In some embodiments, the second processing unit 320 is specifically configured to: determine to transmit the PSFCH carrying the feedback information corresponding to the first PSSCH by using the m-th PSFCH transmission occasion in case that the result of the channel access procedure indicates a channel being idle; otherwise, the second processing unit is specifically configured to determine to not transmit the PSFCH carrying the feedback information corresponding to the first PSSCH by using the m-th PSFCH transmission occasion; or discard sidelink transmission corresponding to the m-th PSFCH transmission occasion.

In some embodiments, at most one PSFCH carrying the feedback information corresponding to the first PSSCH is transmitted by the terminal device in the M PSFCH transmission occasions.

In some embodiments, the first processing unit 310 is specifically configured to: determine the M PSFCH transmission occasions corresponding to the first PSSCH in a set of PSFCH transmission slots configured by resource pool configuration information.

In some embodiments, the first processing unit 310 is specifically configured to: determine a slot where a first PSFCH transmission occasion in the M PSFCH transmission occasions is located according to a slot where the first PSSCH is located and a minimum time gap between the first PSSCH and a PSFCH associated with the first PSSCH; and determine slot(s) where remaining M-1 PSFCH transmission occasions in the M PSFCH transmission occasions are located according to the slot where the first PSFCH transmission occasion is located and a PSFCH period.

In some embodiments, the first processing unit 310 is specifically configured to: determine the slot where the first PSFCH transmission occasion in the M PSFCH transmission occasions is located as a slot n' according to the slot n where the first PSSCH is located and the minimum time gap $T_{gap}$ between the first PSSCH and the PSFCH associated with the first PSSCH. The slot n' is the first slot, including the PSFCH transmission resource, after the slot $n+T_{gap}$ (including the slot $n+T_{gap}$).

In some embodiments, the first processing unit 310 is specifically configured to: determine a slot where an A-th PSFCH transmission occasion in the M PSFCH transmission occasions is located according to the following formula:

$$\mathrm{n}' + \mathrm{K1} \times (A - 1) \times \mathrm{P};$$

where n'represents the slot where the first PSFCH transmission occasion is located, A is a positive integer and $2 \le A \le M$, K1 is a positive integer, K1 is determined by pre-definition, pre-configuration or configuration information from a network device, and P represents the PSFCH period.

In some embodiments, the first processing unit 310 is further configured to determine, according to an index value m, a PSFCH transmission resource in a PSFCH transmission resource set which is included in the slot where the m-th PSFCH transmission occasion in the M PSFCH transmission occasions is located, m is a positive integer and $1 \le m \le M$.

In some embodiments, each PSFCH transmission slot in the set of PSFCH transmission slots includes M PSFCH resource subsets. The first processing unit is configured to determine that the PSFCH transmission resource of the m-th PSFCH transmission occasion corresponding to the first PSSCH is located in an m-th PSFCH resource subset in the slot where the m-th PSFCH transmission occasion is located.

In some embodiment, the first processing unit is further configured to determine the PSFCH transmission resource in the m-th PSFCH resource subset in the slot where the m-th PSFCH transmission occasion is located according to at least one of: a sub-channel index corresponding to a frequency-domain starting position of the first PSSCH; a number of sub-channels corresponding to a frequency-domain resource size occupied by the first PSSCH; slot information of the first PSSCH; ID information of a transmitting device for the first PSSCH; or ID information of the terminal device.

In some embodiment, the first processing unit 310 is specifically configured to determine that the PSFCH transmission resource of the m-th PSFCH transmission occasion is located in a first resource set in a PSFCH slot where the m-th PSFCH transmission occasion is located.

PRBs included in the first resource set are:

$$\left[(i + j \cdot P) \cdot M_{\text{subch, slot}}^{\text{PSFCH}} + (m - 1) \cdot M_{\text{PRB, set}}^{\text{PSFCH}}/M, \ (i + 1 + j \cdot P) \cdot M_{\text{subch, slot}}^{\text{PSFCH}} - 1 + (m - 1) \cdot M_{\text{PRB, set}}^{\text{PSFCH}}/M\right];$$

; where $i$ represents a slot where the first PSSCH is located, $j$ represents a sub-channel index corresponding to a sub-channel occupied by the first PSSCH, or $j$ represents a sub-channel index corresponding to a first sub-channel occupied by the first PSSCH, i = 0,1, ... ..., $P$ - 1, $j$ = 0,1, ... ... , - 1 $P$ represents a PSFCH period, $M_{\text{subch, slot}}^{\text{PSFCH}} = M_{\text{PRB, set}}^{\text{PSFCH}}/(M \cdot N_{\text{subch}} \cdot P)$, $M_{\text{PRB, set}}^{\text{PSFCH}}$ represents a number of PRBs, available for PSFCH transmission, configured in the PSFCH slot, M represents a number of PSFCH transmission occasions corresponding to the first PSSCH, and $N_{\text{subch}}$ represents a number of sub-channels in a resource pool, m is a positive integer and $1 \le m \le M$.

In some embodiments, if the RB included in the first transmission resource set is denoted as $M_{\text{set}}$, the PSFCH transmission resource set included in the m-th PSFCH transmission occasion corresponding to PSSCH is:

$$R_{\text{PRB, CS}}^{\text{PSFCH}} = N_{\text{type}}^{\text{PSFCH}} \cdot M_{\text{set}} \cdot N_{\text{CS}}^{\text{PSFCH}};$$

where $N_{\text{CS}}^{\text{PSFCH}}$ represents a cyclic shift pair supported in the PRB of a PSFCH. $N_{\text{type}}^{\text{PSFCH}}=1$, or $N_{\text{type}}^{\text{PSFCH}}=N_{\text{subch}}^{\text{PSSCH}}$, $N_{\text{subch}}^{\text{PSSCH}}$ is the number of sub-channels occupied by the PSSCH. Further, the transmission resources of the PSFCH in the PSFCH transmission resource set are determined by using the above Formula 4, and will not be elaborated herein again.

In some embodiments, the first processing unit 310 is specifically configured to: determine the PSFCH transmission resource in the PSFCH transmission resource set which is included in the slot where the m-th PSFCH transmission occasion is located according to the following formula:

$$\left(P_{\text{ID}} + M_{\text{ID}} + K2 \cdot (m - 1)\right) mod R_{\text{PRB, CS}}^{\text{PSFCH}};$$

where $P_{\text{ID}}$ represents ID information of a transmitting device for transmitting the first PSSCH, $M_{\text{ID}}$ represents a member ID of the terminal device in a communication group, or $M_{\text{ID}} = 0$, K2 is determined by pre-definition, pre-configuration or configuration information from a network device, $R_{\text{PRB, CS}}^{\text{PSFCH}} = N_{\text{type}}^{\text{PSFCH}} \cdot M_{\text{subch, slot}}^{\text{PSFCH}} \cdot N_{\text{CS}}^{\text{PSFCH}}$. Where $N_{\text{type}}^{\text{PSFCH}}$ is

equal to 1, or $N_{\text{type}}^{\text{PSFCH}}$ is equal to $N_{\text{subch}}^{\text{PSSCH}}$, $N_{\text{subch}}^{\text{PSSCH}}$ represents the number of sub-channels corresponding to the a frequency-domain resource size occupied by the first PSSCH, $M_{\text{subch, slot}}^{\text{PSFCH}} = M_{\text{PRB, set}}^{\text{PSFCH}}/(N_{\text{subch}} \cdot P)$, P represents a PSFCH period, $M_{\text{PRB, set}}^{\text{PSFCH}}$ represents the number of PRBs, available for PSFCH transmission, configured in a PSFCH slot, $N_{\text{subch}}$ represents a number of sub-channels in a resource pool, $N_{\text{CS}}^{\text{PSFCH}}$ represents a configured number of cyclic shift pairs, m is a positive integer and $1 \le m \le M$, and *mod* represents a modulo operation.

In some embodiments, the first processing unit 310 is specifically configured to determine a PSFCH transmission resource set, in a slot including a PSFCH transmission resource, corresponding to the first PSSCH according to a number of slots of all PSSCHs associated with a PSFCH transmission slot.

In some embodiments, a PSFCH corresponding to the first PSSCH is located in a second resource set in a slot of the PSFCH corresponding to the first PSSCH. PRBs included in the second resource set are:

$$\left[\left(i + j \cdot N_{\text{PSSCH}}^{\text{PSFCH}}\right) \cdot M_{\text{subch, slot}}^{\text{PSFCH}}, \ \left(i + 1 + j \cdot N_{\text{PSSCH}}^{\text{PSFCH}}\right) \cdot M_{\text{subch, slot}}^{\text{PSFCH}} - 1\right];$$

where *i* represents a slot where the first PSSCH is located, *j* represents a sub-channel index corresponding to a sub-channel occupied by the first PSSCH, or *j* represents a sub-channel index corresponding to a first sub-channel occupied by the first PSSCH, $i = 0, 1, \ldots\ldots, N_{\text{PSSCH}}^{\text{PSFCH}} - 1$, $j = 0, 1, \ldots\ldots, N_{\text{subch}}$ - 1, $N_{\text{PSSCH}}^{\text{PSFCH}} = M \cdot P$, *P* represents a PSFCH period, $M_{\text{subch, slot}}^{\text{PSFCH}} = M_{\text{PRB, set}}^{\text{PSFCH}}/\left(N_{\text{subch}} \cdot N_{\text{PSSCH}}^{\text{PSFCH}}\right)$, M represents a number of PSFCH transmission occasions corresponding to the first PSSCH, $M_{\text{PRB, set}}^{\text{PSFCH}}$ represents a number of PRBs, available for PSFCH transmission, configured in a PSFCH slot, and $N_{\text{subch}}$ represents a number of sub-channels comprised in a resource pool, m is a positive integer and $1 \le m \le M$.

In some embodiments, the first processing unit 310 is specifically configured to: determine the M PSFCH transmission occasions corresponding to the first PSSCH according to M sets of PSFCH transmission resources configured in a time domain.

The M sets of PSFCH transmission resources respectively correspond to the M PSFCH transmission occasions, and each set of PSFCH transmission resources in the M sets of PSFCH transmission resources has a same period.

In some implementations of the second embodiment, different sets of PSFCH transmission resources in the M sets of PSFCH transmission resources correspond to different time-domain offsets, respectively. A time-domain offset is used for determining a slot where a PSFCH transmission resource, in each set of PSFCH transmission resources within an SFN period or a DFN period, is located.

In some embodiments, the time-domain offset corresponding to a k-th set of PSFCH transmission resources in the M sets of PSFCH transmission resources is $T_{k\_offset}$, and the slot, where the PSFCH transmission resource within the SFN period or the DFN period is located, determined according to $T_{k\_offset}$ corresponding to the k-th set of PSFCH transmission resources is a slot k satisfying the following formula:

$$\left(k - T_{k\_offset}\right) \bmod P = 0;$$

where P represents a PSFCH period and *mod* represents a modulo operation.

In some embodiments, the first processing unit 310 is specifically configured to: determine a first PSFCH slot in an S-th set of PSFCH transmission resources in the M sets of PSFCH transmission resources according to PSFCH configuration information and slot information of the first PSSCH, in which a time-domain offset corresponding to the S-th set of PSFCH transmission resources is 0, and the first PSFCH slot is a slot corresponding to a first PSFCH transmission occasion in the M PSFCH transmission occasions; and determine M-1 slots, including PSFCH transmission resources, after the slot corresponding to the first PSFCH transmission occasion as slots corresponding to remaining M-1 PSFCH transmission occasions in the M PSFCH transmission occasions, respectively.

In some embodiments, the first processing unit 310 is specifically configured to: determine in the M sets of PSFCH transmission resources, a slot corresponding to a first PSFCH transmission occasion in the M PSFCH transmission occasions according to a slot where the first PSSCH is located and a minimum time gap between the first PSSCH and a PSFCH associated with the first PSSCH; and determine M-1 slots, including PSFCH transmission resources, after the slot corresponding to the first PSFCH transmission occasion as slots corresponding to remaining M-1 PSFCH transmission occasions in the M PSFCH transmission occasions, respectively.

In some embodiments, the first processing unit 310 is further configured to determine, according to an index value m, a PSFCH transmission resource in a PSFCH transmission resource set which is included in the slot where the m-th PSFCH transmission occasion in the M PSFCH transmission occasions is located, m is a positive integer and $1 \leq m \leq M$.

In some embodiments, a PSFCH transmission slot includes M PSFCH resource subsets.

The first processing unit 310 is specifically configured to: determine that the PSFCH transmission resource of the m-th PSFCH transmission occasion corresponding to the first PSSCH is located in an m-th PSFCH resource subset in the slot where the m-th PSFCH transmission occasion is located.

In some embodiment, the first processing unit is further configured to determine the PSFCH transmission resource in the m-th PSFCH resource subset in the slot where the m-th PSFCH transmission occasion is located according to at least one of: a sub-channel index corresponding to a frequency-domain starting position of the first PSSCH; a number of sub-channels corresponding to a frequency-domain resource size occupied by the first PSSCH; slot information of the first PSSCH; ID information of a transmitting device for the first PSSCH; or ID information of the terminal device.

In some embodiments, the first processing unit 310 is specifically configured to determine a PSFCH transmission resource set, in a slot including a PSFCH transmission resource, corresponding to the first PSSCH according to a number of slots of all PSSCHs associated with a PSFCH transmission slot.

In some embodiments, a PSFCH corresponding to the first PSSCH is located in a third resource set in a slot of the PSFCH corresponding to the first PSSCH, and wherein PRBs included in the third resource set are:

$$\left[\left(i + j \cdot N_{\text{PSSCH}}^{\text{PSFCH}}\right) \cdot M_{\text{subch, slot}}^{\text{PSFCH}}, \ \left(i + 1 + j \cdot N_{\text{PSSCH}}^{\text{PSFCH}}\right) \cdot M_{\text{subch, slot}}^{\text{PSFCH}} - 1\right];$$

where $i$ represents a slot where the first PSSCH is located, $j$ represents a sub-channel index corresponding to a sub-channel occupied by the first PSSCH, or $j$ represents a sub-channel index corresponding to a first sub-channel occupied by the first PSSCH, $i = 0, 1, \ldots\ldots, N_{\text{PSSCH}}^{\text{PSFCH}} - 1$, $j = 0, 1, \ldots\ldots, N_{\text{subch}} - 1$, $N_{\text{PSSCH}}^{\text{PSFCH}} = P$, $P$ represents a PSFCH period, $M_{\text{subch, slot}}^{\text{PSFCH}} = M_{\text{PRB, set}}^{\text{PSFCH}} / \left(N_{\text{subch}} \cdot N_{\text{PSSCH}}^{\text{PSFCH}}\right)$, $M_{\text{PRB, set}}^{\text{PSFCH}}$ represents a number of PRBs, available for PSFCH transmission, configured in the PSFCH slot, M represents a number of PSFCH transmission occasions corresponding to the first PSSCH, and $N_{\text{subch}}$ represents a number of sub-channels comprised in a resource pool, m is a positive integer and $1 \leq m \leq M$.

In some embodiments, the above-mentioned processing unit may be one or more processors.

It should be understood that the terminal device 300 according to the embodiments of the disclosure may correspond to the terminal device in the method embodiments of the disclosure, and the above and other operations and/or functions of various units in the terminal device 300 are used for performing the respective flows of the terminal device in the method 200 for wireless communication as illustrated in FIG. 16, details will not be elaborated herein again for the sake of brevity.

FIG. 25 is a schematic structural diagram of a communication device 400 according to an embodiment of the disclosure. The communication device 400 illustrated in FIG. 25 includes a processor 410. The processor 410 may be configured to call a computer program stored in a memory and run the computer program to perform the method according to the embodiments of the disclosure.

In some embodiments, as illustrated in FIG. 25, the communication device 400 may further include a memory 420. The processor 410 may be configured to call the computer program stored in the memory 420 and run the computer program to perform the method according to the embodiments of the disclosure.

The memory 420 may be a separate device independent from the processor 410, or may be integrated in the processor 410.

In some embodiments, as illustrated in FIG. 25, the communication device 400 may further include a transceiver 430. The processor 410 may control the transceiver 430 to communicate with other devices, specifically, to transmit information or data to other devices, or receive information or data from other devices.

The transceiver 430 may include a transmitter and a receiver. The transceiver 430 may further include an antenna, and there may be one or more antennas.

In some embodiments, the communication device 400 may specifically be a network device in the embodiments of the disclosure. The communication device 400 may perform corresponding flows that are implemented by the network device in various methods of the embodiments of the disclosure. For brevity, details are not described herein again.

In some embodiments, the communication device 400 may specifically be a terminal device in the embodiments of the disclosure. The communication device 400 may perform corresponding flows that are implemented by the terminal device in various methods of the embodiments of the disclosure. For brevity, details are not described herein again.

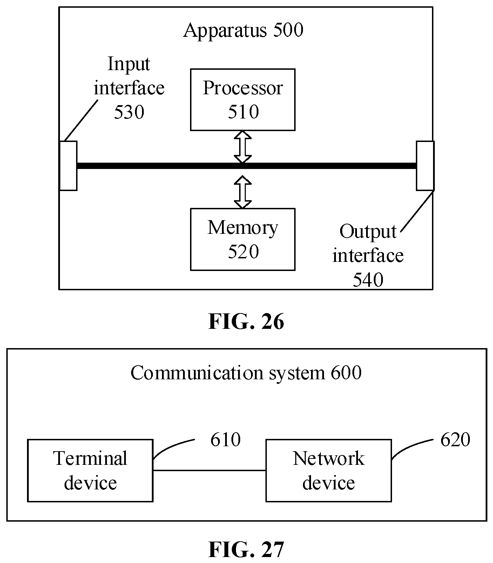

FIG. 26 is a schematic structural diagram of an apparatus according to an embodiment of the disclosure. The apparatus 500 illustrated in FIG. 26 includes a processor 510. The processor 510 may be configured to call a computer program stored in a memory and run the computer program to perform the method according to the embodiments of the disclosure.

In some embodiments, as illustrated in FIG. 26, the apparatus 500 may further include a memory 520. The processor 510 may be configured to call a computer program stored in the memory 520 and run the computer program to perform the method according to the embodiments of the disclosure.

The memory 520 may be a separate device independent from the processor 510, or may be integrated in the processor 510.

In some embodiments, the apparatus 500 may further include an input interface 530. The processor 510 may control the input interface 530 to communicate with other devices or chips, specifically, to obtain information or data from other devices or chips.

In some embodiments, the apparatus 500 may further include an output interface 540. The processor 510 may control the output interface 540 to communicate with other devices or chips, specifically, to output information or data to other devices or chips.

In some embodiments, the apparatus may be applied to a network device in the embodiments of the disclosure. The apparatus may perform corresponding flows that are performed by the network device in various methods of the embodiments of the disclosure. For brevity, details are not described herein again.

In some embodiments, the apparatus may be applied to a terminal device in the embodiments of the disclosure. The apparatus may perform corresponding flows that are performed by the terminal device in various methods of the embodiments of the disclosure. For brevity, details are not described herein again.

In some embodiments, the apparatus mentioned in the embodiments of the present disclosure may also be a chip. The chip be a system-level chip, a system chip, a chip system or a chip of a system on chip, etc.

FIG. 27 is a schematic block diagram of a communication system 600 according to an embodiment of the disclosure. As illustrated in FIG. 27, the communication system 600 includes a terminal device 610 and a network device 620.

The terminal device 610 may be configured to perform corresponding functions that are implemented by the terminal device of the above method. The network device 620 may be configured to perform corresponding functions that are implemented by the network device of the above method. For brevity, details are not described herein again.

It should be understood that, the processor in the embodiments of the disclosure may be an integrated circuit chip having a signal processing capability. During implementation, the steps of the foregoing method embodiments may be implemented by using a hardware integrated logic circuit in the processor or implemented by using instructions in a software form. The foregoing processor may be a general purpose processor, a Digital Signal Processor (DSP), an Application-Specific Integrated Circuit (ASIC), a Field Programmable Gate Array (FPGA), or another programmable logical device, discrete gate or transistor logical device, or discrete hardware component. The processor may implement or perform methods, steps and logical block diagrams disclosed in the embodiments of the disclosure. The general purpose processor may be a microprocessor or the processor may be any conventional processor and the like. Steps of the methods disclosed with reference to the embodiments of the disclosure may be directly executed and completed by means of a hardware decoding processor, or may be executed and completed by using a combination of hardware and software modules in the decoding processor. The software module may be located in a mature storage medium in the field, such as a random access memory, a flash memory, a read-only memory, a programmable read-only memory, an electrically-erasable programmable memory, or a register. The storage medium is located in the memory, and the processor reads information in the memory and completes the steps in the foregoing methods in combination with hardware of the processor.

It can be understood that, the memory in the embodiments of the disclosure may be a volatile memory or a non-volatile memory, or may include both a volatile memory and a non-volatile memory. The non-volatile memory may be a Read-Only Memory (ROM), a Programmable Read-Only Memory (PROM), an Erasable PROM (EPROM), an Electrically EPROM (EEPROM) or a flash memory. The volatile memory may be a Random Access Memory (RAM), and is used as an external cache. Through exemplary but not limited description, many forms of RAMs may be used, for example, a Static RAM (SRAM), a Dynamic RAM (DRAM), a Synchronous DDRAM (SDRAM), a Double Data Rate SDRAM (DDR SDRAM), an Enhanced SDRAM (ESDRAM), a Synch Link DRAM (SLDRAM) and a Direct Rambus RAM (DR RAM). It should be noted that, the memory of the system and the method described herein aims to include but not be limited to these memories and any other suitable types of memories.

It should be understood that, the foregoing memory is exemplary but not limited description, for example, the memory in the embodiments of the disclosure may be an SRAM, a DRAM, an SDRAM, a DDR SDRAM, an ESDRAM, an SLDRA) and a DR RAM, etc. It should be noted that, the memory in the embodiments of the disclosure aims to include but not be limited to these memories and any other suitable types of memories.

An embodiment of the disclosure further provides a computer-readable storage medium, which is configured to store a computer program.

In some embodiments, the computer-readable storage medium may be applied to a network device in the embodiments of the disclosure, and the computer program, when being run on a computer, causes the computer to perform corresponding flows that are performed by the network device in various methods of the embodiments of the disclosure. For brevity, details are not described herein again.

In some embodiments, the computer-readable storage medium may be applied to a terminal device in the embodiments of the disclosure, and the computer program, when being run on a computer, causes the computer to perform corresponding flows that are performed by the terminal device in various methods of the embodiments of the disclosure. For brevity, details are not described herein again.

An embodiment of the disclosure further provides a computer program product including a computer program.

In some embodiments, the computer program product may be applied to a network device in the embodiments of the disclosure, and the computer program instructions, when being run on a computer, cause the computer to perform corresponding flows that are performed by the network device in various methods of the embodiments of the disclosure. For brevity, details are not described herein again.

In some embodiments, the computer program product may be applied to a terminal device in the embodiments of the disclosure, and the computer program instructions, when being run on a computer, cause the computer to perform corresponding flows that are performed by the terminal device in various methods of the embodiments of the disclosure. For brevity, details are not described herein again.

An embodiment of the disclosure further provides a computer program, which is not covered by the claims.

In some embodiments, the computer program may be applied to a network device in the embodiments of the disclosure, the computer program, when being run on a computer, causes the computer to perform corresponding flows that are performed by the network device in various methods of the embodiments of the disclosure. For brevity, details are not described herein again.

In some embodiments, the computer program may be applied to a terminal device in the embodiments of the disclosure, the computer program, when being run on a computer, causes the computer to perform corresponding flows that are performed by the terminal device in various methods of the embodiments of the disclosure. For brevity, details are not described herein again.

A person of ordinary skill in the art may be aware that, in combination with the examples described in the embodiments disclosed in this specification, units and algorithm steps may be implemented by electronic hardware, or a combination of computer software and electronic hardware. Whether the functions are performed by hardware or software depends on particular applications and design constraint conditions of the technical solutions. Those skilled in the art may use different methods to implement the described functions for each particular application, but it should not be considered that the implementation goes beyond the scope of this application.

It may be clearly understood by those skilled in the art that, for the purpose of convenient and brief description, the detailed working process of the foregoing system, apparatus, and units may refer to the corresponding process in the foregoing method embodiments, and details are not described herein again.

In the several embodiments provided in this disclosure, it should be understood that the disclosed system, device, and method may be implemented in other schemes. For example, the described apparatus embodiments are merely exemplary. For example, the unit division is merely a logical function division and there may be other divisions in actual implementation. For example, multiple units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical or other forms.

The units described as separate parts may be or may not be physically separate, and parts displayed as units may be or may not be physical units, they may be located in one position, or may be distributed on multiple network units. Some or all of the units may be selected according to actual needs to achieve the objectives of the solutions of the embodiments.

In addition, functional units in the embodiments of this disclosure may be integrated into one processing unit, or each of the units may exist alone physically, or two or more units are integrated into one unit.

When the functions are implemented in form of a software functional module and sold or used as an independent product, the functions may be stored in a computer-readable storage medium. With regard to such an understanding, the technical solutions of this disclosure essentially, or the part of which contributing to the prior art, or part of the technical solutions may be implemented in the form of a software product. The computer software product is stored in a storage medium, and includes several instructions for instructing a computer device (which may be a personal computer, a server, a network device, and the like) to perform all or a part of the steps of the method described in the embodiment of the disclosure. The foregoing storage medium includes: any medium that can store program codes, such as a USB flash disk, a removable hard disk, an ROM, an RAM, a magnetic disk, or an optical disk.

The foregoing descriptions are merely specific implementations of this application, but are not intended to limit the scope of protection of this application. The scope of protection of the invention is defined in the appended set of claims.

**Claims**

1. A method for wireless communication in a NR system, comprising:

> determining (S210), by a terminal device, M physical sidelink feedback channel, PSFCH, transmission occasions of a PSFCH carrying feedback information corresponding to a first physical sidelink shared channel, PSSCH, wherein different PSFCH transmission occasions in the M PSFCH transmission occasions correspond to different time-domain resources, respectively; and
> for an m-th PSFCH transmission occasion in the M PSFCH transmission occasions, determining (S220), by the terminal device according to a result of a channel access procedure, whether to transmit the PSFCH carrying feedback information corresponding to the first PSSCH by using the m-th PSFCH transmission occasion, wherein M and m are positive integers, $M \geq 2$, and $1 \leq m \leq M$,
> wherein at most one PSFCH carrying the feedback information corresponding to the first PSSCH is transmitted by the terminal device in the M PSFCH transmission occasions,
> wherein determining, by the terminal device, the M PSFCH transmission occasions corresponding to the first PSSCH comprises:
>
>> determining, by the terminal device, the M PSFCH transmission occasions corresponding to the first PSSCH in a plurality of PSFCH transmission slots configured by resource pool configuration information,
>> wherein the method further comprises:
>>
>>> determining, by the terminal device, a PSFCH transmission resource in a PSFCH transmission resource set which is comprised in the slot where the m-th PSFCH transmission occasion in the M PSFCH transmission occasions is located,
>>> wherein each PSFCH transmission slot in the plurality of PSFCH transmission slots comprises M PSFCH resource subsets, and each of the M PSFCH resource subsets comprises resources at granularity of interlaced resource block, IRB; and
>>> determining, by the terminal device, the PSFCH transmission resource in the PSFCH transmission resource set which is comprised in the slot where the m-th PSFCH transmission occasion is located comprises:
>>> determining, by the terminal device, that the PSFCH transmission resource of the m-th PSFCH transmission occasion corresponding to the first PSSCH is located in an m-th PSFCH resource subset in the slot where the m-th PSFCH transmission occasion is located.

2. The method of claim 1, wherein determining, by the terminal device according to the result of the channel access procedure, whether to transmit the PSFCH carrying the feedback information corresponding to the first PSSCH by using the m-th PSFCH transmission occasion comprises:

> determining, by the terminal device, to transmit the PSFCH carrying the feedback information corresponding to the first PSSCH by using the m-th PSFCH transmission occasion in case that the result of the channel access procedure indicates a channel being idle; otherwise
> determining, by the terminal device, not to transmit the PSFCH carrying the feedback information corresponding to the first PSSCH by using the m-th PSFCH transmission occasion; or discarding, by the terminal device, sidelink transmission corresponding to the m-th PSFCH transmission occasion.

3. The method of claim 1, wherein determining, by the terminal device, the M PSFCH transmission occasions corresponding to the first PSSCH in the plurality of PSFCH transmission slots configured by the resource pool configuration information comprises:

> determining, by the terminal device, a slot where a first PSFCH transmission occasion in the M PSFCH transmission occasions is located according to a slot where the first PSSCH is located and a minimum time gap between the first PSSCH and a PSFCH associated with the first PSSCH; and
> determining, by the terminal device, slot(s) where remaining M-1 PSFCH transmission occasions in the M PSFCH transmission occasions are located according to the slot where the first PSFCH transmission occasion is located and a PSFCH period.

4. The method of claim 3, wherein
   determining, by the terminal device, the slot(s) where the remaining M-1 PSFCH transmission occasions in the M PSFCH transmission occasions are located according to the slot where the first PSFCH transmission occasion is located and the PSFCH period comprises:

determining, by the terminal device, a slot where an A-th PSFCH transmission occasion in the M PSFCH transmission occasions is located according to the following formula:

$$n' + K1 \times (A - 1) \times P;$$

where n' represents the slot where the first PSFCH transmission occasion is located, A is a positive integer and $2 \leq A \leq M$, K1 is a positive integer, K1 is determined by pre-definition, pre-configuration or configuration information from a network device, and P represents the PSFCH period.

5. The method of claim 1, further comprising:
determining, by the terminal device, the PSFCH transmission resource in the m-th PSFCH resource subset in the slot where the m-th PSFCH transmission occasion is located according to at least one of:

a sub-channel index corresponding to a frequency-domain starting position of the first PSSCH;
a number of sub-channels corresponding to a frequency-domain resource size occupied by the first PSSCH;
slot information of the first PSSCH;
identity, ID, information of a transmitting device for the first PSSCH; or
ID information of the terminal device.

6. A terminal device (300), configured to operate in a NR system, comprising a first processing unit (310) and a second processing unit (320), wherein

the first processing unit (310) is configured to determine M physical sidelink feedback channel, PSFCH, transmission occasions of a PSFCH carrying feedback information corresponding to a first physical sidelink shared channel, PSSCH, wherein different PSFCH transmission occasions in the M PSFCH transmission occasions correspond to different time-domain resources, respectively; and
for an m-th PSFCH transmission occasion in the M PSFCH transmission occasions, the second processing unit (320) is configured to determine, according to a result of a channel access procedure, whether to transmit the PSFCH carrying feedback information corresponding to the first PSSCH by using the m-th PSFCH transmission occasion, wherein
M and m are positive integers, $M \geq 2$, and $1 \leq m \leq M$,
wherein at most one PSFCH carrying the feedback information corresponding to the first PSSCH is transmitted by the terminal device in the M PSFCH transmission occasions,
wherein the first processing unit (310) is specifically configured to:

determine the M PSFCH transmission occasions corresponding to the first PSSCH in a plurality of PSFCH transmission slots configured by resource pool configuration information,
wherein the first processing unit (310) is further configured to determine a PSFCH transmission resource in a PSFCH transmission resource set which is comprised in the slot where the m-th PSFCH transmission occasion in the M PSFCH transmission occasions is located,
wherein each PSFCH transmission slot in the plurality of PSFCH transmission slots comprises M PSFCH resource subsets, each of the M PSFCH resource subsets comprises resources at granularity of interlaced resource block, IRB; and the first processing unit (310) is specifically configured to:
determine that the PSFCH transmission resource of the m-th PSFCH transmission occasion corresponding to the first PSSCH is located in an m-th PSFCH resource subset in the slot where the m-th PSFCH transmission occasion is located.

7. The terminal device of claim 6, wherein the second processing unit (320) is specifically configured to:

determine to transmit the PSFCH carrying the feedback information corresponding to the first PSSCH by using the m-th PSFCH transmission occasion in case that the result of the channel access procedure indicates a channel being idle; otherwise
determine to not transmit the PSFCH carrying the feedback information corresponding to the first PSSCH by using the m-th PSFCH transmission occasion; or discard sidelink transmission corresponding to the m-th PSFCH transmission occasion.

8. The terminal device of claim 6, wherein the first processing unit (310) is specifically configured to:

determine a slot where a first PSFCH transmission occasion in the M PSFCH transmission occasions is located according to a slot where the first PSSCH is located and a minimum time gap between the first PSSCH and a PSFCH associated with the first PSSCH; and
determine slot(s) where remaining M-1 PSFCH transmission occasions in the M PSFCH transmission occasions are located according to the slot where the first PSFCH transmission occasion is located and a PSFCH period.

9. The terminal device of claim 8, wherein
the first processing unit (310) is specifically configured to:
determine a slot where an A-th PSFCH transmission occasion in the M PSFCH transmission occasions is located according to the following formula:

$$\mathrm{n}' + \mathrm{K1} \times (A - 1) \times \mathrm{P};$$

where n'represents the slot where the first PSFCH transmission occasion is located, A is a positive integer and $2 \leq A \leq M$, K1 is a positive integer, K1 is determined by pre-definition, pre-configuration or configuration information from a network device, and P represents the PSFCH period.

10. The terminal device of claim 6, wherein the first processing unit (310) is further configured to determine the PSFCH transmission resource in the m-th PSFCH resource subset in the slot where the m-th PSFCH transmission occasion is located according to at least one of:

a sub-channel index corresponding to a frequency-domain starting position of the first PSSCH;
a number of sub-channels corresponding to a frequency-domain resource size occupied by the first PSSCH;
slot information of the first PSSCH;
identity (ID) information of a transmitting device for the first PSSCH; or
ID information of the terminal device.

11. A chip, comprising a processor configured to call a computer program stored in a memory to and run the computer program, to cause a terminal device mounted with the chip to perform the method according to any one of claims 1 to 5.

12. A computer-readable storage medium, configured to store a computer program which, when being run on a computer, causes the computer to perform the method according to any one of claims 1 to 5.

13. A computer program product, comprising instructions which, when the program is executed by a computer, cause the computer to carry out the method according to any one of claims 1 to 5.

**Patentansprüche**

1. Verfahren zur Drahtloskommunikation in einem NR-System, umfassend:

Bestimmen (S210), durch eine Endgerätevorrichtung, von M Übertragungsanlässen eines physischen Sidelink-Rückkanalkanals (Physical Sidelink Feedback Channel, PSFCH) zur Übertragung eines PSFCH, der Rückmeldeinformationen trägt, die einem ersten physischen gemeinsam genutzten Sidelink-Kanal (Physical Sidelink Shared Channel, PSSCH) entsprechen, wobei unterschiedliche PSFCH-Übertragungsanlässe in den M PSFCH-Übertragungsanlässen jeweils unterschiedlichen Zeitbereichsressourcen entsprechen; und
für einen m-ten PSFCH-Übertragungsanlass der M PSFCH-Übertragungsanlässe, Bestimmen (S220), durch die Endgerätevorrichtung gemäß einem Ergebnis eines Kanalzugriffsverfahrens, ob der PSFCH, der die Rückmeldeinformationen trägt, die dem ersten PSSCH entsprechen, unter Verwendung des m-ten PSFCH-Übertragungsanlasses übertragen wird, wobei
M und m positive ganze Zahlen sind, $M \geq 2$ und $1 \leq m \leq M$, wobei höchstens ein PSFCH, der die Rückmeldeinformationen trägt, die dem ersten PSSCH entsprechen, durch die Endgerätevorrichtung in den M PSFCH-Übertragungsanlässen übertragen wird,

wobei das Bestimmen, durch die Endgerätevorrichtung, der M PSFCH-Übertragungsanlässe, die dem ersten PSSCH entsprechen, umfasst:

Bestimmen, durch die Endgerätevorrichtung, der M PSFCH-Übertragungsanlässe, die dem ersten PSSCH entsprechen, in einer Vielzahl von PSFCH-Übertragungsschlitzen, die durch Ressourcenpool-Konfigurationsinformationen konfiguriert sind,
wobei das Verfahren ferner umfasst:

Bestimmen, durch die Endgerätevorrichtung, einer PSFCH-Übertragungsressource in einer PSFCH-Übertragungsressourcenmenge, die in dem Übertragungsschlitz enthalten ist, in dem der m-te PSFCH-Übertragungsanlass der M PSFCH-Übertragungsanlässe liegt,
wobei jeder PSFCH-Übertragungsschlitz der Vielzahl von PSFCH-Übertragungsschlitzen M PSFCH-Ressourcen-Teilmengen umfasst und jede der M PSFCH-Ressourcen-Teilmengen Ressourcen mit einer Granularität eines verschachtelten Ressourcenblocks (Interlaced Resource Block, IRB) umfasst; und
wobei das Bestimmen, durch die Endgerätevorrichtung, der PSFCH-Übertragungsressource in der PSFCH-Übertragungsressourcenmenge, die in dem Übertragungsschlitz enthalten ist, in dem der m-te PSFCH-Übertragungsanlass liegt, umfasst:
Bestimmen, durch die Endgerätevorrichtung, dass die PSFCH-Übertragungsressource des m-ten PSFCH-Übertragungsanlasses, die dem ersten PSSCH entspricht, in einer m-ten PSFCH-Ressourcen-Teilmenge in dem Übertragungsschlitz liegt, in dem der m-te PSFCH-Übertragungsanlass liegt.

2. Verfahren nach Anspruch 1, wobei das Bestimmen, durch die Endgerätevorrichtung gemäß dem Ergebnis des Kanalzugriffsverfahrens, ob der PSFCH, der die Rückmeldeinformationen trägt, die dem ersten PSSCH entsprechen, unter Verwendung des m-ten PSFCH-Übertragungsanlasses übertragen wird, umfasst:

Bestimmen, durch die Endgerätevorrichtung, den PSFCH, der die Rückmeldeinformationen trägt, die dem ersten PSSCH entsprechen, unter Verwendung des m-ten PSFCH-Übertragungsanlasses zu übertragen, falls das Ergebnis des Kanalzugriffsverfahrens anzeigt, dass ein Kanal frei ist; andernfalls
Bestimmen, durch die Endgerätevorrichtung, den PSFCH, der die Rückmeldeinformationen trägt, die dem ersten PSSCH entsprechen, nicht unter Verwendung des m-ten PSFCH-Übertragungsanlasses zu übertragen; oder
Verwerfen, durch die Endgerätevorrichtung, einer Sidelink-Übertragung, die dem m-ten PSFCH-Übertragungsanlass entspricht.

3. Verfahren nach Anspruch 1, wobei das Bestimmen, durch die Endgerätevorrichtung, der M PSFCH-Übertragungsanlässe, die dem ersten PSSCH entsprechen, in der Vielzahl von PSFCH-Übertragungsschlitzen, die durch die Ressourcenpool-Konfigurationsinformationen konfiguriert sind, umfasst:

Bestimmen, durch die Endgerätevorrichtung, eines Übertragungsschlitzes, in dem ein erster PSFCH-Übertragungsanlass der M PSFCH-Übertragungsanlässe liegt, gemäß einem Übertragungsschlitz, in dem der erste PSSCH liegt, und gemäß einer minimalen Zeitlücke zwischen dem ersten PSSCH und einem PSFCH, der dem ersten PSSCH zugeordnet ist; und
Bestimmen, durch die Endgerätevorrichtung, eines oder mehrerer Übertragungsschlitze, in denen verbleibende M-1 PSFCH-Übertragungsanlässe der M PSFCH-Übertragungsanlässe liegen, gemäß dem Übertragungsschlitz, in dem der erste PSFCH-Übertragungsanlass liegt, und gemäß einer PSFCH-Periode.

4. Verfahren nach Anspruch 3, wobei
das Bestimmen, durch die Endgerätevorrichtung, der Übertragungsschlitze, in denen die verbleibenden M-1 PSFCH-Übertragungsanlässe der M PSFCH-Übertragungsanlässe liegen, gemäß dem Übertragungsschlitz, in dem der erste PSFCH-Übertragungsanlass liegt, und gemäß der PSFCH-Periode, umfasst:

Bestimmen, durch die Endgerätevorrichtung, eines Übertragungsschlitzes, in dem ein A-ter PSFCH-Übertragungsanlass der M PSFCH-Übertragungsanlässe liegt, gemäß folgender Formel:

$$n' + K1 \times (A - 1) \times P;$$

wobei n' den Übertragungsschlitz darstellt, in dem der erste PSFCH-Übertragungsanlass liegt, A eine positive ganze Zahl ist und $2 \leq A \leq M$ gilt, K1 eine positive ganze Zahl ist, wobei K1 durch Vorabdefinition, Vorkonfiguration oder Konfigurationsinformationen von einem Netzwerkelement bestimmt ist, und P die PSFCH-Periode darstellt.

5. Verfahren nach Anspruch 1, ferner umfassend:

   Bestimmen, durch die Endgerätevorrichtung, der PSFCH-Übertragungsressource in der m-ten PSFCH-Ressourcen-Teilmenge in dem Übertragungsschlitz, in dem der m-te PSFCH-Übertragungsanlass liegt, gemäß mindestens einem der Folgenden:

   einem Unterkanalindex, der einer Frequenzbereichs-Startposition des ersten PSSCH entspricht;
   einer Anzahl von Unterkanälen, die einer Frequenzbereichs-Ressourcengröße entsprechen, die durch den ersten PSSCH belegt ist;
   Übertragungsschlitzinformationen des ersten PSSCH;
   Informationen über die Kennung (ID) eines sendenden Geräts für den ersten PSSCH; oder
   ID-Informationen des Endgeräts.

6. Endgerätevorrichtung (300), die konfiguriert ist, um in einem NR-System betrieben zu werden, umfassend eine erste Verarbeitungseinheit (310) und eine zweite Verarbeitungseinheit (320), wobei

   die erste Verarbeitungseinheit (310) konfiguriert ist, um M Übertragungsanlässe eines physischen Sidelink-Rückkanalkanals (PSFCH) zur Übertragung eines PSFCH zu bestimmen, der Rückmeldeinformationen trägt, die einem ersten physischen gemeinsam genutzten Sidelink-Kanal (PSSCH) entsprechen, wobei unterschiedliche PSFCH-Übertragungsanlässe der M PSFCH-Übertragungsanlässe jeweils unterschiedlichen Zeitbereichsressourcen entsprechen; und
   für einen m-ten PSFCH-Übertragungsanlass der M PSFCH-Übertragungsanlässe die zweite Verarbeitungseinheit (320) dazu konfiguriert ist, gemäß einem Ergebnis eines Kanalzugriffsverfahrens zu bestimmen, ob der PSFCH, der die Rückmeldeinformationen trägt, die dem ersten PSSCH entsprechen, unter Verwendung des m-ten PSFCH-Übertragungsanlasses übertragen wird, wobei M und m positive ganze Zahlen sind, $M \geq 2$ und $1 \leq m \leq M$, wobei höchstens ein PSFCH, der die Rückmeldeinformationen trägt, die dem ersten PSSCH entsprechen, durch die Endgerätevorrichtung in den M PSFCH-Übertragungsanlässen übertragen wird,
   wobei die erste Verarbeitungseinheit (310) insbesondere konfiguriert ist, um:

   die M PSFCH-Übertragungsanlässe, die dem ersten PSSCH entsprechen, in einer Vielzahl von PSFCH-Übertragungsschlitzen zu bestimmen, die durch Ressourcenpool-Konfigurationsinformationen konfiguriert sind,
   wobei die erste Verarbeitungseinheit (310) ferner konfiguriert ist, eine PSFCH-Übertragungsressource in einer PSFCH-Übertragungsressourcenmenge zu bestimmen, die in dem Übertragungsschlitz enthalten ist, in dem der m-te PSFCH-Übertragungsanlass der M PSFCH-Übertragungsanlässe liegt,
   wobei jeder PSFCH-Übertragungsschlitz der Vielzahl von PSFCH-Übertragungsschlitzen M PSFCH-Ressourcen-Teilmengen umfasst und jede der M PSFCH-Ressourcen-Teilmengen Ressourcen mit einer Granularität eines verschachtelten Ressourcenblocks (Interlaced Resource Block, IRB) umfasst, und die erste Verarbeitungseinheit (310) insbesondere konfiguriert ist, um:
   zu bestimmen, dass die PSFCH-Übertragungsressource des m-ten PSFCH-Übertragungsanlasses, die dem ersten PSSCH entspricht, in einer m-ten PSFCH-Ressourcen-Teilmenge in dem Übertragungsschlitz liegt, in dem der m-te PSFCH-Übertragungsanlass liegt.

7. Endgerätevorrichtung nach Anspruch 6, wobei die zweite Verarbeitungseinheit (320) insbesondere konfiguriert ist, um:

   zu bestimmen, den PSFCH, der die Rückmeldeinformationen trägt, die dem ersten PSSCH entsprechen, unter Verwendung des m-ten PSFCH-Übertragungsanlasses zu übertragen, falls das Ergebnis des Kanalzugriffsverfahrens anzeigt, dass ein Kanal frei ist; andernfalls
   zu bestimmen, den PSFCH, der die Rückmeldeinformationen trägt, die dem ersten PSSCH entsprechen, nicht unter Verwendung des m-ten PSFCH-Übertragungsanlasses zu übertragen; oder eine Sidelink-Übertragung zu verwerfen, die dem m-ten PSFCH-Übertragungsanlass entspricht.

8. Endgerätevorrichtung nach Anspruch 6, wobei die erste Verarbeitungseinheit (310) insbesondere konfiguriert ist, um:

   einen Übertragungsschlitz zu bestimmen, in dem ein erster PSFCH-Übertragungsanlass der M PSFCH-Übertragungsanlässe liegt, gemäß einem Übertragungsschlitz, in dem der erste PSSCH liegt, und gemäß einer minimalen Zeitlücke zwischen dem ersten PSSCH und einem PSFCH, der dem ersten PSSCH zugeordnet ist; und

einen oder mehrere Übertragungsschlitze zu bestimmen, in denen verbleibende M-1 PSFCH-Übertragungsanlässe der M PSFCH-Übertragungsanlässe liegen, gemäß dem Übertragungsschlitz, in dem der erste PSFCH-Übertragungsanlass liegt, und gemäß einer PSFCH-Periode.

9. Endgerätevorrichtung nach Anspruch 8, wobei die erste Verarbeitungseinheit (310) insbesondere konfiguriert ist, um:

einen Übertragungsschlitz zu bestimmen, in dem ein A-ter PSFCH-Übertragungsanlass der M PSFCH-Übertragungsanlässe liegt, gemäß der folgenden Formel:

$$n' + K1 \times (A - 1) \times P;$$

wobei n' den Übertragungsschlitz darstellt, in dem der erste PSFCH-Übertragungsanlass liegt, A eine positive ganze Zahl ist und $2 \leq A \leq M$ gilt, K1 eine positive ganze Zahl ist, wobei K1 durch Vorabdefinition, Vorkonfiguration oder Konfigurationsinformationen von einem Netzwerkelement bestimmt ist, und P die PSFCH-Periode darstellt.

10. Endgerätevorrichtung nach Anspruch 6, wobei die erste Verarbeitungseinheit (310) ferner konfiguriert ist, um die PSFCH-Übertragungsressource in der m-ten PSFCH-Ressourcen-Teilmenge in dem Übertragungsschlitz, in dem der m-te PSFCH-Übertragungsanlass liegt, gemäß mindestens einem der Folgenden zu bestimmen:

einem Unterkanalindex, der einer Frequenzbereichs-Startposition des ersten PSSCH entspricht; einer Anzahl von Unterkanälen, die einer Frequenzbereichs-Ressourcengröße entsprechen, die durch den ersten PSSCH belegt ist; Übertragungsschlitzinformationen des ersten PSSCH; Informationen über die Kennung (ID) eines sendenden Geräts für den ersten PSSCH; oder ID-Informationen des Endgeräts.

11. Chip, umfassend einen Prozessor, der dazu konfiguriert ist, ein in einem Speicher gespeichertes Computerprogramm aufzurufen und auszuführen, um eine mit dem Chip ausgestattete Endgerätevorrichtung zu veranlassen, das Verfahren nach einem der Ansprüche 1 bis 5 durchzuführen.

12. Computerlesbares Speichermedium, das konfiguriert ist, um ein Computerprogramm zu speichern, das bei Ausführung auf einem Computer den Computer dazu veranlasst, das Verfahren nach einem der Ansprüche 1 bis 5 durchzuführen.

13. Computerprogrammprodukt, umfassend Anweisungen, die bei Ausführung auf einem Computer den Computer dazu veranlassen, das Verfahren nach einem der Ansprüche 1 bis 5 durchzuführen.

**Revendications**

1. Procédé pour la communication sans fil dans un système NR, comprenant les étapes consistant à :

déterminer (S210), par un dispositif terminal, M occasions de transmission de canal de rétroaction de liaison latérale physique, PSFCH, d'un PSFCH transportant une information de rétroaction correspondant à un premier canal partagé de liaison latérale physique, PSSCH, où différentes occasions de transmission de PSFCH parmi les M occasions de transmission de PSFCH correspondent à différentes ressources de domaine temporel, respectivement ; et pour une m-ième occasion de transmission de PSFCH parmi les M occasions de transmission de PSFCH, déterminer (S220), par le dispositif terminal en fonction d'un résultat d'une procédure d'accès à un canal, s'il faut transmettre le PSFCH transportant l'information de rétroaction correspondant au premier PSSCH en utilisant la m-ième occasion de transmission de PSFCH, où M et m sont des entiers positifs, M ≥ 2 et 1 ≤ m ≤ M, dans lequel au moins un PSFCH transportant l'information de rétroaction correspondant au premier PSSCH est transmis par le dispositif terminal dans les M occasions de transmission de PSFCH,

dans lequel la détermination, par le dispositif terminal, des M occasions de transmission de PSFCH correspondant au premier PSSCH consiste à :

déterminer, par le dispositif terminal, les M occasions de transmission de PSFCH correspondant au premier PSSCH dans une pluralité de créneaux de transmission de PSFCH configurés par une information de configuration de pool de ressources,
le procédé comprenant également l'étape consistant à :

déterminer, par le dispositif terminal, une ressource de transmission de PSFCH dans un ensemble de ressources de transmission de PSFCH qui est compris dans le créneau dans lequel la m-ième occasion de transmission de PSFCH parmi les M occasions de transmission de PSFCH est située,
dans lequel chaque créneau de transmission de PSFCH de la pluralité de créneaux de transmission de PSFCH comprend M sous-ensembles de ressources de PSFCH, et chacun des M sous-ensembles de ressources de PSFCH comprend des ressources ayant une granularité de bloc de ressources entrelacées, IRB ; et
la détermination, par le dispositif terminal, de la ressource de transmission de PSFCH dans l'ensemble de ressources de transmission de PSFCH qui est compris dans le créneau dans lequel la m-ième occasion de transmission de PSFCH est située consiste à :
déterminer, par le dispositif terminal, que la ressource de transmission de PSFCH de la m-ième occasion de transmission de PSFCH correspondant au premier PSSCH est située dans un m-ième sous-ensemble de ressources de PSFCH du créneau dans lequel la m-ième occasion de transmission de PSFCH est située.

2. Procédé selon la revendication 1, dans lequel la détermination, par le dispositif terminal en fonction du résultat de la procédure d'accès à un canal, de la nécessité de transmettre le PSFCH transportant l'information de rétroaction correspondant au premier PSSCH en utilisant la m-ième occasion de transmission de PSFCH comprend les étapes consistant à :

décider, par le dispositif terminal, de transmettre le PSFCH transportant l'information de rétroaction correspondant au premier PSSCH en utilisant la m-ième occasion de transmission de PSFCH dans le cas où le résultat de la procédure d'accès à un canal indique qu'un canal est inactif ; sinon
décider, par le dispositif terminal, de ne pas transmettre le PSFCH transportant l'information de rétroaction correspondant au premier PSSCH en utilisant la m-ième occasion de transmission de PSFCH ; ou éliminer, par le dispositif terminal, la transmission de liaison latérale correspondant à la m-ième occasion de transmission de PSFCH.

3. Procédé selon la revendication 1, dans lequel la détermination, par le dispositif terminal, des M occasions de transmission de PSFCH correspondant au premier PSSCH dans la pluralité de créneaux de transmission de PSFCH configurés par l'information de configuration de pool de ressources comprend les étapes consistant à :

déterminer, par le dispositif terminal, un créneau dans lequel une première occasion de transmission de PSFCH parmi les M occasions de transmission de PSFCH est située en fonction d'un créneau dans lequel le premier PSSCH est situé et d'un intervalle de temps minimum entre le premier PSSCH et un PSFCH associé au premier PSSCH ; et
déterminer, par le dispositif terminal, un ou plusieurs créneaux dans lesquels les M-1 occasions de transmission de PSFCH restantes parmi les M occasions de transmission de PSFCH sont situées en fonction du créneau dans lequel la première occasion de transmission de PSFCH est située et d'une période de PSFCH.

4. Procédé selon la revendication 3, dans lequel
la détermination, par le dispositif terminal, du ou des créneaux dans lesquels les M-1 occasions de transmission de PSFCH restantes parmi les M occasions de transmission de PSFCH sont situées en fonction du créneau dans lequel la première occasion de transmission de PSFCH est située et de la période de PSFCH consiste à :

déterminer, par le dispositif terminal, un créneau dans lequel une A-ième occasion de transmission de PSFCH parmi les M occasions de transmission de PSFCH est située selon la formule suivante :

$$n' + K1 \times (A - 1) \times P \; ;$$

où n' représente le créneau dans lequel la première occasion de transmission de PSFCH est située, A est un entier positif et $2 \leq A \leq M$, K1 est un entier positif, K1 est déterminé par une information de définition préalable, de configuration préalable ou de configuration provenant d'un dispositif de réseau, et P représente la période de PSFCH.

5. Procédé selon la revendication 1, comprenant également l'étape consistant à :
déterminer, par le dispositif terminal, la ressource de transmission de PSFCH dans le m-ième sous-ensemble de ressources de PSFCH du créneau dans lequel la m-ième occasion de transmission de PSFCH est située en fonction d'au moins un élément parmi :

un indice de sous-canal correspondant à une position de début de domaine fréquentiel du premier PSSCH ;
un nombre de sous-canaux correspondant à une taille de ressource de domaine fréquentiel occupée par le premier PSSCH ;
une information de créneau du premier PSSCH ;
une information d'identité, ID, d'un dispositif transmetteur utilisé pour le premier PSSCH ; ou
une information d'ID du dispositif terminal.

6. Dispositif terminal (300), configuré pour fonctionner dans un système NR, comprenant une première unité de traitement (310) et une deuxième unité de traitement (320), dans lequel

la première unité de traitement (310) est configurée pour déterminer M occasions de transmission de canal de rétroaction de liaison latérale physique, PSFCH, d'un PSFCH transportant une information de rétroaction correspondant à un premier canal partagé de liaison latérale physique, PSSCH, où différentes occasions de transmission de PSFCH parmi les M occasions de transmission de PSFCH correspondent à différentes ressources de domaine temporel, respectivement ; et
pour une m-ième occasion de transmission de PSFCH parmi les M occasions de transmission de PSFCH, la deuxième unité de traitement (320) est configurée pour déterminer, en fonction d'un résultat d'une procédure d'accès à un canal, s'il faut transmettre le PSFCH transportant l'information de rétroaction correspondant au premier PSSCH en utilisant la m-ième occasion de transmission de PSFCH, où
M et m sont des entiers positifs, $M \geq 2$ et $1 \leq m \leq M$, dans lequel au moins un PSFCH transportant l'information de rétroaction correspondant au premier PSSCH est transmis par le dispositif terminal dans les M occasions de transmission de PSFCH,
dans lequel la première unité de traitement (310) est spécifiquement configurée pour :

déterminer les M occasions de transmission de PSFCH correspondant au premier PSSCH dans une pluralité de créneaux de transmission de PSFCH configurés par une information de configuration de pool de ressources,
dans lequel la première unité de traitement (310) est également configurée pour déterminer une ressource de transmission de PSFCH dans un ensemble de ressources de transmission de PSFCH qui est compris dans le créneau dans lequel la m-ième occasion de transmission de PSFCH parmi les M occasions de transmission de PSFCH est située,
dans lequel chaque créneau de transmission de PSFCH de la pluralité de créneaux de transmission de PSFCH comprend M sous-ensembles de ressources de PSFCH, chacun des M sous-ensembles de ressources de PSFCH comprend des ressources ayant une granularité de bloc de ressources entrelacées, IRB ; et la première unité de traitement (310) est spécifiquement configurée pour :
déterminer que la ressource de transmission de PSFCH de la m-ième occasion de transmission de PSFCH correspondant au premier PSSCH est située dans un m-ième sous-ensemble de ressources de PSFCH du créneau dans lequel la m-ième occasion de transmission de PSFCH est située.

7. Dispositif terminal selon la revendication 6, dans lequel la deuxième unité de traitement (320) est spécifiquement configurée pour :

décider de transmettre le PSFCH transportant l'information de rétroaction correspondant au premier PSSCH en utilisant la m-ième occasion de transmission de PSFCH dans le cas où le résultat de la procédure d'accès à un canal indique qu'un canal est inactif ; sinon
décider de ne pas transmettre le PSFCH transportant l'information de rétroaction correspondant au premier PSSCH en utilisant la m-ième occasion de transmission de PSFCH ; ou éliminer la transmission de liaison latérale correspondant à la m-ième occasion de transmission de PSFCH.

**8.** Dispositif terminal selon la revendication 6, dans lequel la première unité de traitement (310) est spécifiquement configurée pour :

déterminer un créneau dans lequel une première occasion de transmission de PSFCH parmi les M occasions de transmission de PSFCH est située en fonction d'un créneau dans lequel le premier PSSCH est situé et d'un intervalle de temps minimum entre le premier PSSCH et un PSFCH associé au premier PSSCH ; et déterminer un ou plusieurs créneaux dans lesquels les M-1 occasions de transmission de PSFCH restantes parmi les M occasions de transmission de PSFCH sont situées en fonction du créneau dans lequel la première occasion de transmission de PSFCH est située et d'une période de PSFCH.

**9.** Dispositif terminal selon la revendication 8, dans lequel
la première unité de traitement (310) est spécifiquement configurée pour :

déterminer un créneau dans lequel une A-ième occasion de transmission de PSFCH parmi les M occasions de transmission de PSFCH est située selon la formule suivante :

$$\text{n'} + \text{K1} \times (\text{A} - 1) \times \text{P} \text{ ;}$$

où n' représente le créneau dans lequel la première occasion de transmission de PSFCH est située, A est un entier positif et $2 \leq A \leq M$, K1 est un entier positif, K1 est déterminé par une information de définition préalable, de configuration préalable ou de configuration provenant d'un dispositif de réseau, et P représente la période de PSFCH.

**10.** Dispositif terminal selon la revendication 6, dans lequel la première unité de traitement (310) est également configurée pour déterminer la ressource de transmission de PSFCH dans le m-ième sous-ensemble de ressources de PSFCH du créneau dans lequel la m-ième occasion de transmission de PSFCH est située en fonction d'au moins un élément parmi :

un indice de sous-canal correspondant à une position de début de domaine fréquentiel du premier PSSCH ; un nombre de sous-canaux correspondant à une taille de ressource de domaine fréquentiel occupée par le premier PSSCH ; une information de créneau du premier PSSCH ; une information d'identité (ID) d'un dispositif transmetteur utilisé pour le premier PSSCH ; ou une information d'ID du dispositif terminal.

**11.** Puce, comprenant un processeur configuré pour appeler un programme informatique stocké dans une mémoire et exécuter le programme informatique, amenant un dispositif terminal monté sur la puce à réaliser le procédé selon l'une quelconque des revendications 1 à 5.

**12.** Support de stockage lisible par ordinateur configuré pour stocker un programme informatique qui, lorsqu'il est exécuté sur un ordinateur, amène l'ordinateur à réaliser le procédé selon l'une quelconque des revendications 1 à 5.

**13.** Produit-programme informatique, comprenant des instructions qui, lorsque le programme est exécuté par un ordinateur, amènent l'ordinateur à mettre en œuvre le procédé selon l'une quelconque des revendications 1 à 5.

**FIG. 1**

**FIG. 2**

**FIG. 3**

**FIG. 4**

**FIG. 5**

**FIG. 6**

**FIG. 7**

**FIG. 8**

**FIG. 9**

**FIG. 10**

**FIG. 11**

**FIG. 12**

slot 0  slot 1  slot 2  slot 3  slot 4  slot 5  slot 6  slot 7  slot 8  slot 9  slot 10  slot 11  slot 12

⊠ PSSCH    ■ PSFCH

PSSCH transmission resrouce

PSFCH
transmission
resrouce

| | | | | | PRB 15 |
| | | | | | PRB 14 |
| | | | | | PRB 13 |
| Sub-channel 1 | Sub-channel 1 | Sub-channel 1 | Sub-channel 1 | | PRB 12 |
| | | | | | PRB 11 |
| | | | | | PRB 10 |
| | | | | | PRB 9 |
| | | | | | PRB 8 |
| | | | | | PRB 7 |
| | | | | | PRB 6 |
| | | | | | PRB 5 |
| Sub-channel 0 | Sub-channel 0 | Sub-channel 0 | Sub-channel 0 | | PRB 4 |
| | | | | | PRB 3 |
| | | | | | PRB 2 |
| | | | | | PRB 1 |
| | | | | | PRB 0 |
| slot 0 | slot 1 | slot 2 | slot 3 | slot 4 | slot 5 |

FIG. 13

**FIG. 14**

▨ IRB 1   ▢ IRB 2

**FIG. 15**

200

| | |
|---|---|
| A terminal device determines M PSFCH transmission occasions corresponding to a first PSSCH. Different PSFCH transmission occasions in the M PSFCH transmission occasions correspond to different time-domain resources, respectively | S210 |

| | |
|---|---|
| For an m-th PSFCH transmission occasion in the M PSFCH transmission occasions, the terminal device determines, according to a result of a channel access procedure, whether to transmit a PSFCH carrying feedback information corresponding to the first PSSCH by using the m-th PSFCH transmission occasion. M and m are positive integers, $M \geq 2$, and $1 \leq m \leq M$ | S220 |

**FIG. 16**

slot 0 | slot 1 | slot 2 | slot 3 | slot 4 | slot 5 | slot 6 | slot 7 | slot 8 | slot 9 | slot 10 | slot 11 | slot 12

PSSCH    PSFCH

**FIG. 17**

EP 4 395 435 B1

FIG. 18

PSSCH transmission resource

PSFCH transmission resource

| | | | | | | | | | | PSFCH transmission resource | |
|---|---|---|---|---|---|---|---|---|---|---|---|
| sub-channel 1 | sub-channel 1 | sub-channel 1 | sub-channel 1 | sub-channel 1 | sub-channel 1 | sub-channel 1 | sub-channel 1 | | | PRB 15 | Resource set of the second transmission occasions of PSFCH corresponding to PSSCHs in slots 3 to 6 |
| | | | | | | | | | | PRB 14 | |
| | | | | | | | | | | PRB 13 | |
| | | | | | | | | | | PRB 12 | |
| | | | | | | | | | | PRB 11 | |
| | | | | | | | | | | PRB 10 | |
| | | | | | | | | | | PRB 9 | |
| | | | | | | | | | | PRB 8 | |
| sub-channel 0 | sub-channel 0 | sub-channel 0 | sub-channel 0 | sub-channel 0 | sub-channel 0 | sub-channel 0 | sub-channel 0 | | | PRB 7 | Resource set of the first transmission occasions of PSFCH corresponding to PSSCHs in slots 7 to 10 |
| | | | | | | | | | | PRB 6 | |
| | | | | | | | | | | PRB 5 | |
| | | | | | | | | | | PRB 4 | |
| | | | | | | | | | | PRB 3 | |
| | | | | | | | | | | PRB 2 | |
| | | | | | | | | | | PRB 1 | |
| | | | | | | | | | | PRB 0 | |
| slot 3 | slot 4 | slot 5 | slot 6 | slot 7 | slot 8 | slot 9 | slot 10 | slot 11 | slot 12 | | |

(b)

**FIG. 19**

FIG. 20

FIG. 21

slot 0 | slot 1 | slot 2 | slot 3 | slot 4 | slot 5 | slot 6 | slot 7 | slot 8 | slot 9 | slot 10 | slot 11 | slot 12

First set of PSFCH transmission resources

Second set of PSFCH transmission resources

Third set of PSFCH transmission resources

Fourth set of PSFCH transmission resources

PSSCH

**FIG. 22**

slot 0    slot 1    slot 2     slot 3     slot 4     slot 5     slot 6     slot 7     slot 8     slot 9    slot 10    slot 11    slot 12

■ First set of PSFCH transmission resources

▨ Second set of PSFCH transmission resources

▯ PSSCH

**(a)**

slot 0    slot 1    slot 2     slot 3     slot 4     slot 5     slot 6     slot 7     slot 8     slot 9    slot 10    slot 11    slot 12

▨ Transmission resrouce subset 0 of the first set of PSFCH transmission resources

▨ Transmission resrouce subset 0 of the second set of PSFCH transmission resources

▯ Transmission resrouce subset 1 of the first set of PSFCH transmission resources

▯ Transmission resrouce subset 1 of the second set of PSFCH transmission resources

▯ PSSCH

**(b)**

**FIG. 23**

Terminal device 300

First processing unit 310

Second processing unit 320

**FIG. 24**

Communication device 400

Memory 420

Processor 410

Transceiver 430

**FIG. 25**

**FIG. 26**

**FIG. 27**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021081948 A1
- EP 4325762 A1
- EP 4325906 A1
- WO 2022073186 A1